# EUROPÄISCHE PATENTSCHRIFT

(11) **EP 2 403 978 B1**
(45) Veröffentlichungstag und Bekanntmachung des Hinweises auf die Patenterteilung: **17.12.2014**
(21) Anmeldenummer: 10707888.3
(22) Anmeldetag: 03.03.2010
(51) Int. Cl.: C23C 22/83, C23C 22/34, C23C 22/66, C23C 22/56, C23C 18/12, C09D 5/08, B05D 7/14

(54) **VERFAHREN ZUR BESCHICHTUNG VON METALLISCHEN OBERFLÄCHEN IN EINEM MEHRSTUFIGEN VERFAHREN**
METHOD FOR COATING METAL SURFACES IN A MULTI-STEP METHOD
PROCÉDÉ DE REVÊTEMENT DE SURFACES MÉTALLIQUES SUIVANT UN PROCESSUS EN PLUSIEURS ÉTAPES

(30) Priorität: 06.03.2009 DE 102009001372
(43) Veröffentlichungstag der Anmeldung: 11.01.2012
(73) Patentinhaber: Chemetall GmbH, 60487 Frankfurt am Main (DE)
(72) Erfinder: SEBRALLA, Lars, 63486 Bruchköbel (DE); WALTER, Manfred, 63452 Hanau (DE)
(74) Vertreter: Hübner, Günter
(86) Internationale Anmeldenummer: PCT/EP2010/052687
(87) Internationale Veröffentlichungsnummer: WO 2010/100187

(56) Entgegenhaltungen:
- EP-A2- 1 206 977
- WO-A1-2008/029926
- DE-A1-102005 015 576
- US-A1- 2004 094 235

## Beschreibung

Die Erfindung betrifft ein Verfahren zur Beschichtung von metallischen Oberflächen, insbesondere von Oberflächen von Rädern aus einer Aluminiumlegierung, in einem mehrstufigen Verfahren, bei dem die metallischen Oberflächen mit zwei verschiedenartigen wässerigen Konversionszusammensetzung kontaktiert werden, sowie die Verwendung der nach dem erfindungsgemäßen Verfahren vor der Lackierung oder Verklebung.

Die korrosionsschützende Beschichtung von Rädern aus einer Aluminiumlegierung erfolgt heute weltweit typischerweise mit einer wässerigen Lösung auf Basis von Titan- oder/und Zirkonfluorid oder mit einer wässerigen Lösung auf Basis von Phosphonat-haltigen Verbindungen oder mit einer Kombination aus beiden Lösungen in einem zweistufigen Beschichtungsverfahren, bevor die Räder mit Lack beschichtet werden. Die Räder können gegebenenfalls mehrteilig und evtl. auch aus verschiedenen Werkstoffen, nicht nur aus verschiedenen Aluminium-Werkstoffen, hergestellt sein. Der Fachmann spricht nur von Rädern, der Laie oft stattdessen von Felgen. Darüber hinaus können auch alle anderen Arten von Aluminium-Komponenten erfindungsgemäß beschichtet werden, insbesondere Zierleisten, diverse andere Anbauteile, Profile und Gehäuse.

Es besteht insbesondere bei Oberflächen aus Aluminium und Aluminiumlegierungen der Bedarf, den Korrosionsschutz weiter zu verbessern, vor allem wegen der immer noch trotz hochwertiger Konversionsbeschichtung(en) auftretenden Filiform-Korrosion. Die Filiform-Korrosion tritt typischerweise wie in filigran verlaufenden Fäden z.B. an Kanten von diagedrehten (= Teilbereiche der bereits konversionsbeschichteten und lackierten Oberflächen werden mechanisch abgearbeitet) Flächen und nach kleinen Verletzungen der lackierten Oberflächen durch Steinschläge oder Beschädigungen an der Bordsteinkante auf. Denn die heute bei der Herstellung von Rädern aus Aluminiumlegierungen weltweit genutzten Konversionsbeschichtungszusammensetzungen reichen dennoch nicht aus, um die Filiform-Korrosion ausreichend zu begrenzen.

Auch eine mehrstufige Verfahrensvariante, bei der die Aluminiumoberflächen zuerst mit Titan- oder/und Zirkoniumkomplexfluorid und danach mit mindestens einem Phosphonat behandelt werden, ist für die Erwartungen der Industrie nicht ausreichend.

Die bislang am häufigsten eingesetzten Verfahren zur Behandlung von metallischen Oberflächen bzw. zur Vorbehandlung von metallischen Oberflächen vor der Lackierung basieren vielfach auf dem Einsatz von Chrom(III)- und Chrom(VI)-Verbindungen gegebenenfalls zusammen mit diversen Zusatzstoffen. Als metallische Körper, deren Oberflächen zu behandeln sind, werden vorzugsweise Teile, Band (Coil), Bandabschnitte oder Bauteile wie z.B. Räder beschichtet.

Aufgrund der toxikologischen und ökologischen Risiken, die insbesondere Chromhaltige oder Nickel-haltige Verfahren mit sich bringen, wird schon seit vielen Jahren nach Alternativen zu diesen Verfahren auf allen Gebieten der Oberflächentechnik für metallische Substrate gesucht, aber trotzdem immer wieder gefunden, dass bei vielen Anwendungen völlig Chromat-freie Verfahren nicht 100 % des Leistungsspektrums erfüllen oder nicht mit der gewünschten Sicherheit erfüllen. Weiterhin sind die Anforderungen der Automobilindustrie weiter gestiegen. Daher ist es schwierig, einen noch besseren Korrosionsschutz mit mindestens einer Konversionsbeschichtung als bisher schon erreicht zu erzeugen. Es wird dann versucht, die Chromatgehalte möglichst gering zu halten und so weit als möglich Cr⁶⁺ durch Cr³⁺ zu ersetzen.

Der Einsatz z.B. von Silanen/Silanolen in wässerigen Zusammensetzungen zur Herstellung von Siloxan/Polysiloxan-reichen korrosionsschützenden Beschichtungen vor der Lackierung ist grundsätzlich bekannt. Der Einfachheit halber wird bei Silan/Silanol/Siloxan/Polysiloxan im Folgenden oft nur von Silan gesprochen. Für die Oberflächen aus Aluminium und Aluminiumlegierungen wird ebenfalls im Folgenden oft nur von Aluminium gesprochen.

Diese auf Silan basierenden Beschichtungen haben sich bewährt. Aber teilweise sind die Verfahren zur Beschichtung mit einer als Fest- oder/und Wirkstoff vorwiegend Silan und gegebenenfalls auch organisches Lösemittel enthaltenden wässerigen Zusammensetzung teilweise schwierig anzuwenden. Nicht immer werden diese Beschichtungen mit hervorragenden Eigenschaften ausgebildet. Außerdem kann es hierbei Probleme geben, die sehr dünnen und bevorzugt transparenten Silan-Beschichtungen auf dem metallischen Untergrund sowie deren Fehlstellen mit bloßem Auge oder mit optischen Hilfsmitteln ausreichend zu erkennen oder/und zu charakterisieren. Der Korrosionsschutz und die Lackhaftung der gebildeten Siloxan- oder/und Polysiloxan-reichen Beschichtungen sind oft, aber nicht immer hoch und teilweise auch bei geeigneter Applikation für bestimmte Anwendungen nicht ausreichend hoch. Es bedarf weiterer Verfahren unter Einsatz von mindestens einem Silan, die eine hohe Verfahrenssicherheit und eine hohe Qualität der hiermit hergestellten Beschichtungen insbesondere bezüglich Korrosionsbeständigkeit und Lackhaftung aufweisen.

Bei der Gestaltung Silan-haltiger wässeriger Zusammensetzungen hat sich außerdem eine kleine bzw. große Zugabemenge an mindestens einer Komponente ausgewählt aus der Gruppe von organischen Monomeren, Oligomeren und Polymeren bewährt. Bei derartigen Zusammensetzungen ist die Art und Menge der Silan-Zugabe teilweise von entscheidender Bedeutung für den Erfolg. Üblicherweise sind jedoch die Zugabemengen an Silan hierzu vergleichsweise gering - meistens nur bis zu 5 Gew.-% aller Feststoffgehalte - und wirken dann als "coupling agent" für die vorwiegend organische Zusammensetzung, wobei die haftvermittelnde Wirkung insbesondere zwischen metallischem Substrat und Lack und gegebenenfalls zwischen Pigment und organischen Lackbestandteilen vorherrschen sollte, aber untergeordnet teilweise auch eine geringe vernetzende Wirkung auftreten kann. Vorwiegend werden sehr geringe Silan-Zusätze zu thermisch härtbaren Harzsystemen zugegeben oder silylierte organische Oligomere und Polymere eingesetzt.

DE 102005015576 A1 lehrt Verfahren zur Beschichtung metallischer Oberflächen mit wässerigen Zusammensetzungen auf Basis von Silan, wobei die frisch aufgebrachte Beschichtung mit einem Fluid gespült wird und bis dahin nicht durchgetrocknet wird. EP 1 206 977 A2 beschreibt ein mehrstufiges Verfahren zur Vorbehandlung von Aluminiumrädern, bei dem eine Fluorid-/Komplexfluorid-haltige Lösung und eine Phosphonat-haltige Lösung nacheinander eingesetzt werden.

Es bestand daher die Aufgabe, wässerige Zusammensetzungen vorzuschlagen, die auf einer umweltfreundlichen chemischen Zusammensetzung beruhen und eine hohe Korrosionsbeständigkeit gewährleisten. Vorzugsweise sind derartige Zusammensetzungen auch in Multimetallanwendungen, in denen z.B. Stahl und Zink-reiche metallische Oberflächen und gegebenenfalls auch Aluminium-reiche metallische Oberflächen im gleichen Bad behandelt oder vorbehandelt werden, geeignet. Außerdem bestand die Aufgabe, wässerige Zusammensetzungen vorzuschlagen, die sich zur Beschichtung von Oberflächen von Rädern aus einer Aluminiumlegierung eignen und so hervorragend sind, dass die Filiform-Korrosion zumindest deutlich verringert werden kann.

Die Aufgabe wird gelöst mit einem Verfahren zum Beschichten von metallischen Oberflächen, insbesondere von Oberflächen von Rädern aus einer Aluminiumlegierung, in einem mehrstufigen Verfahren, das dadurch gekennzeichnet ist, dass die metallischen Oberflächen zuerst mit einer einen wesentlichen Gehalt an Silan/Silanol/Siloxan/Polysiloxan enthaltenden wässerigen Zusammensetzung und danach mit einer vorwiegend mindestens eine Phosphonverbindung enthaltenden wässerigen Zusammensetzung kontaktiert werden, wobei mindestens 80 % aller Phosphonverbindungen dieser Zusammensetzung ausgewählt sind aus Verbindungen des Typs XYZ,
wobei Y unabhängig voneinander eine unverzweigte Alkylgruppe mit 8 bis 16 C-Atomen ist oder eine Alkylgruppe mit 8 bis 16 C-Atomen ist, von denen bis zu 20 % der C-Atome der Alkylketten im statistischen Mittel eine funktionelle Gruppe aufweisen,
wobei X eine OH-, NH₂-, NHR'-, CH=CH₂-, CONHOH-, COOR'-, Acrylsäureamid-, Epoxy-, CH₂=CR"-COO-, COOH-, HSO₄-, (OH)₂PO-, (OH)₂PO₂-, (OH)(OR')PO-, (OH)(OR')PO₂- oder eine Si(OH)₃-Gruppe ist,
wobei Z eine (OH)₂PO-, (OH)₂PO₂-, (OH)(OR')PO- oder eine (OH)(OR')PO₂- Gruppe ist,
wobei R' eine Alkylgruppe mit 1 bis 4 C-Atomen ist,
wobei R" ein H-Atom oder eine Alkylgruppe mit 1 bis 4 C-Atomen ist,
wobei die Gruppen X und Z jeweils an die Gruppe Y in ihrer Endstellung gebunden sind
und wobei nacheinander erst eine Silan-Beschichtung und danach eine Phosphonat-Beschichtung ausgebildet werden, bevor die metallischen Oberflächen mit mindestens einer Lackschicht oder/und mit mindestens einer Klebstoffschicht versehen werden.

Der Begriff "vorwiegend" bedeutet, dass die dort genannten Substanzgruppen die Hauptbestandteile dieser Konversionszusammensetzungen sind, wenn von Wasser und gegebenenfalls von organischen Lösemitteln abgesehen wird. Vorzugsweise enthält die Silan-Zusammensetzung als vorwiegenden Bestandteil in der wässerigen Lösung Silane/Silanole/Siloxane/Polysiloxane.

Bei dem erfindungsgemäßen Verfahren können insbesondere Oberflächen von Aluminium, Aluminiumlegierungen oder/und Aluminium-reichen Legierungen mit Aluminium als dem zweithäufigsten Bestandteil besonders erfolgreich vor Korrosion geschützt werden. Aber auch metallische Oberflächen insbesondere auf Basis von Magnesium oder Titan wie Magnesiumlegierungen, Titan und Titanlegierungen lassen sich oft nach dem erfindungsgemäßen Verfahren mit sehr hoher Qualität beschichten.

Die mindestens eine Phosphonverbindung kann insbesondere jeweils mindestens eine Phosphonsäure oder/und deren Derivat(e) wie z.B. mindestens ein Salz oder/und mindestens ein Ester sein, besonders bevorzugt jeweils mindestens eine Diphosphonsäure oder/und deren Derivat(e) wie z.B. mindestens ein Salz oder/und mindestens ein Ester sein. Vorzugsweise ist die mindestens eine Phosphonverbindung in der Lage, eine weitgehend bis vollständig geschlossene korrosionsbeständige Schicht von in etwa einer Monolage auszubilden, insbesondere mit selbst organisierenden Molekülen.

Es wurde jetzt auch gefunden, dass eine Kombination von Silan-Beschichtung und Phosphonat-Beschichtung zu Konversionsschichten von teilweise bisher wahrscheinlich unbekannter Qualität erzeugt werden können. Dabei ist es jetzt sogar möglich, bei Aluminium und Aluminiumlegierungen die Filiform-Korrosion, die bisher nur sehr schwer zu begrenzen war, auf ein Minimum zu bringen. Bei Radabschnitten aus der Aluminiumlegierung AISi7 gelang es offenbar erstmals mit dieser Schichtabfolge, nach Untersuchungen der Daimler AG bezüglich der Filiform-Korrosion eine mittlere Unterwanderung von nur 0,9 mm (Beispiel 25) zu erreichen, wobei eine Chrom(VI)-Beschichtung zum Vergleich sogar eine mittlere Unterwanderung von 2,4 mm, also deutlich schlechtere Werte, erreichte (Vergleichsbeispiel 28). Der maximale Faden der Filiform-Korrosion lag bei Beispiel 25 bei nur 4,0 mm, beim Vergleichsbeispiel 28 mit der Chrom(VI)-Beschichtung jedoch bei 7,0 mm. Eine Chrom (VI)-Beschichtung gilt sonst nach wie vor als derzeitiger bester Korrosionsschutz. Hierzu wurde ein spezieller, bei der Daimler AG entwickelter Test verwendet, der für die Beurteilung der Filiform-Korrosion noch viel schärfer ist als die bis dahin bestehenden Filiform-Tests.

Weiterhin wurde jetzt gefunden, dass es in vielen Ausführungsformen für die Beschichtung der metallischen Oberflächen in dem erfindungsgemäßen Mehrstufenverfahren besonders vorteilhaft ist, wenn die zuerst aufgebrachte Silan-Beschichtung nicht stärker auftrocknet und nicht durchtrocknet, sondern sich in einem feuchten, halbfeuchten oder nur angetrockneten Zustand ohne starke Kondensation und ohne starke Polymerisation der Silane befindet, wenn die Phosphonat-Beschichtung aufgebracht wird.

Es wurde jetzt ferner gefunden, dass Beschichtungen, bei der zuerst eine Phosphonat-Beschichtung aufgebracht wird und danach eine Silan-Beschichtung aufgetragen wird, sich deutlich schlechter verhalten als die erfindungsgemäße Verfahrensvariante. Es wird daher angenommen, dass die Phosphonat-Beschichtung eine deutlich besser geschlossene und daher besser vor Korrosion schützende Schicht ausbildet als es die Silan-Beschichtung ist.

Es wurde gefunden, dass der Zusatz von mindestens einem Komplexfluorid auf Basis von Titan, Hafnium oder/und Zirkonium (einschließlich deren Säure und deren Salzen und Estern) zu der Silan-haltigen wässerigen Zusammensetzung hilft, Beeinträchtigungen der Anbindung von Silan an die metallische Oberfläche zu minimieren bzw. zu vermeiden, so dass sich das Spülen nicht oder nur geringfügig beeinträchtigend auswirken kann. Ein Zusatz von mindestens einem Komplexfluorid oder/und von mindestens einer Verbindung auf Basis von Titan, Hafnium oder/und Zirkonium hilft üblicherweise, dass die Silan-Beschichtung weniger oder sogar gar nicht beim Spülen mit Wasser abgespült werden kann, denn viele Silan-Beschichtungen werden beim Spülen mit Wasser teilweise abgespült. Weiterhin wird die Möglichkeit gegeben, dass sich die Phosphonate der Phosphonat-Beschichtung gegebenenfalls zusätzlich etwas in die Silan-Beschichtung einbauen können und nicht nur außen an die Silan-Beschichtung anbinden.

Es wurde auch gefunden, dass eine Kombination von mindestens zwei Komplexfluoriden, insbesondere auf Basis von Fluortitansäure und von Fluorzirkoniumsäure, eine außerordentliche Qualitätssteigerung der Beschichtung ermöglicht.

Die Kombination zweier Konversionsbeschichtungszusammensetzungen, bei der die eine auf Basis von Silan und die andere auf Basis von Phosphonat ist, ist nicht naheliegend, da dies sehr unterschiedliche Substanzgruppen sind, die sich nicht ohne Weiteres im Rahmen aufeinanderfolgender Beschichtungen erfolgreich kombinieren lassen. Denn die Eigenschaften und das Verhalten von Silanen und von Phosphonaten sind sehr unterschiedlich. Für die Arbeiten für diese Anmeldung wurde ein Aufwand von weit mehr als einem Mannjahr eingesetzt.

Der Begriff "Silan" wird hierbei für Silane, Silanole, Siloxane, Polysiloxane und deren Reaktionsprodukte bzw. Derivate benutzt (= Silane/Silanole/Siloxane/Polysiloxane), vorzugsweise für Silane, Silanole, Siloxane und deren Reaktionsprodukte bzw. Derivate (= Silane/Silanole/Siloxane), die dabei auch oft "Silan"-Gemische sind. Die Angaben der Gehalte erfolgen hierbei vorzugsweise auf der Basis von Silan und nicht auf Basis von Silanol, Siloxan oder/und Polysiloxan. Hierbei werden auch Polysiloxane aufgeführt, da diese sich insbesondere z.B. bei Verwendung von Alkoxysilanen bilden können. Beim Zusetzen von "Silan" werden üblicherweise Silane/Silanole/Siloxane in wässeriger Lösung zugesetzt, die sich in der wässerigen Lösung weiter zu Silanolen/Siloxanen/Polysiloxanen umsetzen können. Der Begriff "Silane/Silanole/Siloxane" kann überall alternativ zu "Silane/Silanole/Siloxane/Polysiloxane" gesetzt werden. Der Begriff "Kondensieren" im Sinne dieser Anmeldung bezeichnet alle Formen der Vernetzung, der Weitervernetzung und der weiteren chemischen Reaktionen der Silane/Silanole/Siloxane/Polysiloxane bzw. Silane/Silanole/Siloxane. Oft werden Silane in Form von Monomeren oder/und Vorkondensaten in Form von Oligomeren oder/und Polymeren als Substanzen für den Zusatz zu einer erfindungsgemäßen Zusammensetzung verwendet; in der wässerigen Zusammensetzung sind meistens trotz des Zusatzes z.B. nur von Silan-Monomeren hieraus innerhalb weniger Stunden oder weniger Tage Oligomere oder/und Polymere entstanden. In der trockenen, hieraus hergestellten Beschichtung finden sich oft Oligomere z.B. im Bereich von 5 bis 30 Monomer-Einheiten oder/und Polymere in Form eines Netzwerks, das hieraus hervorgegangen ist. Der Begriff "Beschichtung" im Sinne dieser Anmeldung bezieht sich auf die mit der wässerigen Zusammensetzung ausgebildete Beschichtung einschließlich des Nassfilms, des angetrockneten Films, des durchgetrockneten Films, des bei erhöhter Temperatur getrockneten Films und des gegebenenfalls thermisch oder/und durch Bestrahlung weiter vernetzten Films.

Bei dem erfindungsgemäßen Verfahren kann als Siliciumverbindung vorzugsweise mindestens ein hydrolysierbares oder/und mindestens ein zumindest teilweise hydrolysiertes Silan in der wässerigen Silan-Zusammensetzung enthalten sein. Es kann vorzugsweise mindestens ein Mono-silyl-Silan, mindestens ein Bis-silyl-Silan oder/und mindestens ein Tris-silyl-Silan in der wässerigen Silan-Zusammensetzung enthalten sein, insbesondere mindestens ein Mono-silyl-Silan oder/und mindestens ein Bis-silyl-Silan. Besonders bevorzugt enthält die wässerige Silan-Zusammensetzung mindestens ein Silan mit mindestens einem Stickstoffatom, insbesondere mit mindestens einer Stickstoff enthaltenden Gruppe. Es kann vorzugsweise mindestens ein Alkoxysilan, mindestens ein Aminosilan, mindestens ein Epoxysilan oder/und mindestens ein Vinylsilan, insbesondere eine Mischung aus mindestens zwei verschiedenen Silanen, besonders bevorzugt eine Mischung von mindestens zwei verschiedenen Stickstoff enthaltenden Silanen wie z.B. eine Mischung von mindestens zwei verschiedenen Aminosilanen in der wässerigen Zusammensetzung enthalten sein. Besonders bevorzugt sind in manchen Ausführungsformen insbesondere solche Silane/Siloxane in der wässerigen Silan-Zusammensetzung, die eine Kettenlänge im Bereich von 2 bis 5 C-Atomen und eine funktionelle Gruppe aufweisen, wobei letztere gegebenenfalls zur Reaktion mit Polymeren geeignet sein kann. Insbesondere kann die Zusammensetzung ein Gemisch aus mindestens zwei Silanen enthalten wie z.B. 1.) mindestens zwei verschiedene Aminosilane, wie z.B. 2.) mindestens ein Bis-silyl-Silan wie z.B. Bis-silyl-Aminosilan mit mindestens einem Monoaminosilan, wie z.B. 3.) mindestens ein Aminosilan mit mindestens einem Alkoxysilan wie z.B. Trialkoxysilyl-propyltetrasulfan oder wie z.B. 4.) mindestens ein Vinylsilan mit mindestens einem Bis-silyl-Silan wie z.B. einem Bis-silyl-Aminosilan oder wie z.B. 5.) mindestens ein Silan mit einer Stickstoff enthaltenden Gruppe und mindestens ein Silan mit mindestens zwei Stickstoff enthaltenden Gruppen oder/und mit mindestens zwei Stickstoffatomen. Ganz besonders bevorzugt ist, dass die wässerige Zusammensetzung mindestens ein Monoaminosilan (mit 1 Aminogruppe im Molekül), mindestens ein Di-aminosilan (mit 2 Aminogruppen im Molekül), mindestens ein Dialkoxysilan oder/und mindestens ein Trialkoxysilan (mit 2 bzw. 3 Alkoxygruppen im Molekül) enthält. Besonders bevorzugt wird mindestens ein Trialkoxysilan wie z.B. ein Bis-(trialkoxysilylalkyl)amin oder eine Kombination von mindestens einem Trialkoxysilan wie z.B. ein Bis-(trialkoxysilylalkyl)amin mit mindestens einem Monoaminosilan wie z.B. einem Gamma-Aminopropyltrialkoxysilan verwendet.

Vorzugsweise enthält die wässerige Zusammensetzung mindestens ein Silan ausgewählt aus der Gruppe von
Glycidoxyalkyltrial koxysilan,
Methacryloxyalkyltrialkoxysilan,
(Trialkoxysilyl)alkylbernsteinsäuresilan,
   Aminoalkylaminoalkylalkyldialkoxysilan,
   (Epoxycycloalkyl)alkyltrial koxysilan,
   Bis-(trialkoxysilylalkyl)amin,
   Bis-(trialkoxysilyl)ethan,
   (Epoxyalkyl)trialkoxysilan,
      N-(trialkoxysilylalkyl)alkylendiamin,
         N-(aminoalkyl)aminoalkyltrialkoxysilan,
            N-(trialkoxysilylalkyl)dialkylentriamin,
               Poly(aminoalkyl)alkyldialkoxysilan,
                  Ureidoalkyltrialkoxysilan und
                     Acetoxysilan.

Vorzugsweise enthält die wässerige Zusammensetzung mindestens ein Silan ausgewählt aus der Gruppe von
3-Glycidoxypropyltriethoxysilan,
3-Glycidoxypropyltrimethoxysilan,
3-Methacryloxypropyltriethoxysilan,
3-Methacryloxypropyltrimethoxysilan,
3-((Triethoxysilyl)propylbernsteinsäuresilan,
Aminoethylaminopropylmethyldiethoxysilan,
Aminoethylaminopropylmethyldimethoxysilan,
Bis(triethoxysilylpropyl)amin,
Bis(trimethoxysilylpropyl)amin,
(3,4-Epoxybutyl)triethoxysilan,
(3,4-Epoxybutyl)trimethoxysilan,
Gamma-Aminopropyltriethoxysilan,
Gamma-Aminopropyltrimethoxysilan,
Gamma-Ureidopropyltrialkoxysilan,
N-(3-(trimethoxysilyl)propyl)ethylendiamin,
N-beta-(aminoethyl)-gamma-aminopropyltriethoxysilan,
N-beta-(aminoethyl)-gamma-aminopropyltrimethoxysilan,
N-(gamma-triethoxysilylpropyl)diethylentriamin,
N-(gamma-trimethoxysilylpropyl)diethylentriamin,
N-(gamma-triethoxysilylpropyl)dimethylentriamin,
N-(gamma-trimethoxysilylpropyl)dimethylentriamin,
Poly(aminoalkyl)ethyldialkoxysilan,
Poly(aminoalkyl)methyldialkoxysilan und
Vinyltriacetoxysilan.

Besonders bevorzugte Siliciumverbindungen sind Bis(3-trimethoxysilylpropyl)amin, Bis(3-triethoxysilylpropyl)amin, 3-Aminopropyltriethoxysilan, Bis-(triethoxysilyl)ethan, Phenylaminopropyltrimethoxysilan, 3-(Triethoxysilyl)propylbernsteinsäureanhydrid, und Triamino-organofunktionelles Silan wie z.B. 3,5,7-Triamino-trimethoxysilan.

In manchen Ausführungsformen oder bei Verwendung von manchen Silanen kann es sinnvoll oder notwendig sein, mindestens ein Silan vorab zu hydrolysieren oder/und erst in einem organischen Lösemittel oder in einem wässerigen Lösemittel-gemisch vorzulösen. Das kann manchmal helfen, der wässerigen Silan-Zusammensetzung eine größere Stabilität zu verleihen und Ausfällungen in der wässerigen Lösung zu vermeiden. Bei dem erfindungsgemäßen Verfahren enthält die Si-Ian/Silanol/Siloxan/Polysiloxan enthaltende wässerige Zusammensetzung vorzugsweise einen Gesamtgehalt an Silan/Silanol/Siloxan/Polysiloxan im Bereich von 0,01 bis 8 g/L, vorzugsweise im Bereich von 0,03 bis 5 g/L oder von 0,1 bis 4 g/L.

Vorzugsweise enthält die Silan/Silanol/Siloxan/Polysiloxan enthaltende wässerige Zusammensetzung in manchen Ausführungsformen a) mindestens eine Verbindung ausgewählt aus Silanen, Silanolen, Siloxanen und Polysiloxanen, b) mindestens eine Titan-, Hafnium- oder/und Zirkonium-haltige Verbindung, gegebenenfalls c) mindestens eine Art Kationen ausgewählt aus Kationen von Metallen der 1. bis 3. und 5. bis 8. Nebengruppe einschließlich Lanthaniden und der 2. Hauptgruppe des Periodensystems der Elemente oder/und mindestens eine entsprechende Verbindung sowie gegebenenfalls mindestens eine Substanz d) ausgewählt aus: d₁) Siliciumfreien Verbindungen mit jeweils mindestens einer Amino-, Harnstoff- (=Ureido-), Imido- oder/und Imino-Gruppe, d₂) Anionen von Nitrit oder/und Verbindungen mit mindestens einer Nitro-Gruppe, d₃) Verbindungen auf Basis von Peroxid und d₄) Phosphor-haltigen Verbindungen, Anionen von mindestens einem Phosphat oder/und Anionen von mindestens einem Phosphonat sowie außerdem e) Wasser und f) gegebenenfalls auch mindestens ein organisches Lösemittel wie z.B. ein Alkohol.

Als Titan-. Hafnium oder/und Zirkonium-haltige Verbindung sind insbesondere die entsprechenden Fluor-haltigen Säuren und ihre Salze sowie Zirkoniumcarbonate besonders bevorzugt. Das Gewichtsverhältnis Z der Silan/Silanol/Siloxan/Polysiloxan enthaltenden wässerigen Zusammensetzung der Summe von Titan, Hafnium oder/und Zirkonium gerechnet als Metall zu Silan gerechnet als Silan-Monomer liegt vorzugsweise im Bereich von 1 : 1 bis 10 : 1, besonders bevorzugt im Bereich von 1,5 : 1 bis 5 : 1 oder von 2 : 1 bis 3 : 1. Das Gewichtsverhältnis F der Silan/Silanol/Siloxan/Polysiloxan enthaltenden wässerigen Zusammensetzung des Gesamtgehalts an Fluor (F_{gesamt}) zu Silan gerechnet als Silan-Monomer liegt vorzugsweise im Bereich von 5 : 1 bis 100 : 1, besonders bevorzugt im Bereich von 10 : 1 bis 50 : 1 oder von 20 : 1 bis 35 : 1 - soweit mindestens eine Fluor-haltige Substanz zugesetzt wurde. Üblicherweise wird der Korrosionsschutz der entsprechenden, mit solchen Silan/Silanol/Siloxan/Polysiloxan enthaltenden wässerigen Zusammensetzungen hergestellten Beschichtungen schlechter, wenn sie Gewichtsverhältnisse Z oder/und F außerhalb des oben genannten breitesten Bereichs aufweisen.

Als Kationen sind insbesondere Kationen von Cer, Eisen, Kalzium, Kupfer, Magnesium, Titan, Yttrium, Zink, Zinn oder/und Zirkonium bevorzugt - insbesondere dann, wenn anschließend ein Elektrotauchlack aufgebracht wird. Vorzugsweise kann sie darüber hinaus in manchen Ausführungsformen auch die Silan/Silanol/Siloxan/Polysiloxan enthaltende wässerige Zusammensetzung jeweils mindestens ein organisches Oligomer oder/und organisches Polymer, mindestens ein Amin, mindestens eine Base, mindestens einen Komplexbildner, mindestens ein Tensid, mindestens eine Art anorganischer Partikel oder/und jeweils mindestens eine anorganische oder/und organische Säure oder/und mindestens eines ihrer Derivate enthalten. Der Gehalt an Zusätzen aus 1.) den oben genannten Kationen, 2.) aus organischen Monomeren, Oligomeren und Polymeren, aus 3.) Aminen, aus 4.) Basen, aus 5.) Komplexbildnern, aus 6.) Tensiden, aus 7.) anorganischen Partikeln oder/und aus 8.) anorganischen oder/und organischen Säuren oder/und mindestens einem ihrer Derivate ist jeweils vorzugsweise Null oder in etwa Null oder 0,001 bis 1 g/L, besonders bevorzugt 0,005 bis 0,1 g/L oder 0,01 bis 0,05 g/L. Außerdem kann ein Katalysator wie z.B. Essigsäure zugesetzt oder/und enthalten sein. Der Zusatz von mindestens einem sauren Bestandteil kann dabei helfen, die metallische Oberfläche ein wenig anzubeizen und eine bessere Haftung der Silan-Beschichtung auf der metallischen Oberfläche zu gewährleisten.

Bei dem erfindungsgemäßen Verfahren weist die Silan/Silanol/Siloxan/Polysiloxan enthaltende wässerige Zusammensetzung vorzugsweise einen pH-Wert im Bereich von 3 bis 11, meistens 3,5 bis 5,5 auf. Bei dem erfindungsgemäßen Verfahren weist die Silan/Silanol/Siloxan/Polysiloxan enthaltende wässerige Zusammensetzung beim Kontaktieren der metallischen Oberfläche vorzugsweise eine Temperatur im Bereich von 5 bis 80 °C auf, besonders bevorzugt im Bereich von 15 bis 55 °C. Bei dem erfindungsgemäßen Verfahren wird die Silan/Silanol/Siloxan/Polysiloxan enthaltende wässerige Zusammensetzung vorzugsweise durch Aufsprühen oder Eintauchen - bei Bändern und Blechen gegebenenfalls auch durch Aufwalzen sowie optional auch dann durch Abquetschen aufgebracht, insbesondere über eine Zeit im Bereich von 0,1 bis 120 Sekunden, besonderst bevorzugt im Bereich von 10 bis 70 Sekunden.

Der Gehalt der Silan-Zusammensetzung an mindestens einem Komplexfluorid, deren Salzen oder/und deren Estern insbesondere auf Basis von Titan, Hafnium, Zirkonium oder/und Aluminium beträgt vorzugsweise 0,05 bis 2 g/L, besonders bevorzugt 0,4 bis 1,5 g/L. Besonders bevorzugt liegen nur solche Verbindungen auf Basis von Titan, Hafnium oder/und Zirkonium vor. Der Gehalt der Silan-Zusammensetzung an freiem Fluorid liegt vorzugsweise im Bereich von 0,001 bis 0,2 g/L, besonders bevorzugt im Bereich von 0,003 bis 0,1 g/L. Bei zu hohen Gehalten an freiem Fluorid kann es zu mattem Aussehen kommen. Der Gehalt der Silan-Zusammensetzung an gesamtem Fluorid F_{gesamt} liegt vorzugsweise im Bereich von 0,005 bis 2 g/L. Der Gehalt der Silan-Zusammensetzung an Kationen von Aluminium, Magnesium oder/und Titan liegt vorzugsweise im Bereich von etwa 0 oder etwa 5 bis 500 mg/L für jede Kationenart, bei Titan insbesondere dann, wenn keine Titanverbindung absichtlich zugesetzt wurde, sondern z.B. durch Abbeizen von metallischen Oberflächen oder/und Einschleppungen herrührt.

Die Schichtgewichte der mit der Silan/Silanol/Siloxan/Polysiloxan enthaltenden wässerigen Zusammensetzung hergestellten Beschichtungen liegt oft vorzugsweise im Bereich von 10 bis 150 mg Silan je m² metallischer Oberfläche, besonders im Bereich von 30 bis 90 mg Silan je m² oder/und oft vorzugsweise im Bereich von 1 bis 20 mg Si gerechnet als Metall je m² metallischer Oberfläche, besonders im Bereich von 2 bis 12 oder von 3 bis 8 mg Si je m². Die Schichtdicken der mit der Silan/Silanol/Siloxan/Polysiloxan enthaltenden wässerigen Zusammensetzung hergestellten Beschichtungen liegen oft vorzugsweise im Bereich von 10 bis 300 nm, besonders bevorzugt im Bereich von 20 bis 200 nm, von 25 bis 150 nm oder von 30 bis 100 nm.

Bei dem erfindungsgemäßen Verfahren werden die metallischen Oberflächen vorzugsweise vor oder/und nach dem Kontaktieren mit einer Silan/Silanol/Siloxan/Polysiloxan enthaltenden wässerigen Zusammensetzung oder/und vor oder/und nach dem Kontaktieren mit einer mindestens eine Phosphonverbindung enthaltenden wässerigen Zusammensetzung mit Wasser gespült. Das hat den Vorteil, dass es zu keiner zu dicken Beschichtung kommen kann, welche im Korrosionstest zu Blasen unter dem Lack führen kann. Hierbei ist es bevorzugt, dass die Silan-Beschichtung nicht durchgetrocknet wird, sondern im feuchten oder angetrockneten Zustand mit der Phosphonat-Beschichtung beschichtet wird. Außerdem hat dies den Vorteil, das einzelne Phosphonate leichter als im getrockneten Zustand in die Silan-Beschichtung mit eingebaut werden können. Alternativ kann die Silan-Beschichtung gut getrocknet werden, bevor sie mit einer Phosphonat-Beschichtung überzogen wird.

Gegebenenfalls wird mindestens eine Spülung mit Wasser nach dem Aufbringen der Zusammensetzung mit Silan/Silanol/Siloxan/Polysiloxan oder/und der Zusammensetzung mit Phosphonverbindung(en) durchgeführt.

Die Silan/Silanol/Siloxan/Polysiloxan bzw. Silan/Silanol/Siloxan enthaltende wässerige Zusammensetzung wird vorzugsweise auf eine gereinigte, entfettete, gespülte oder/und gebeizte metallische Oberfläche, auf eine frische metallische Oberfläche z.B. im Anschluss an ein "Verzinken" mit einer Aluminium-reichen Zinklegierung oder Zink-reichen Aluminiumlegierung oder auf eine vorgeglühte (vorgetemperte) Oberfläche oder auf eine mechanische bearbeitete Oberfläche aufgebracht. Vorzugsweise ist die Aluminium-Oberfläche zum Beschichten so weit als technisch möglich frei von OH-Gruppen oder weist nur eine vergleichsweise dünne Hydroxidschicht von meistens wenigen Nanometer Schichtdicke auf. Oft ist sie sehr viel dünner als 0,01 µm und bei hochwertiger Reinigung der metallischen Oberflächen sogar üblicherweise im Bereich von 0,001 bis 0,003 µm Schichtdicke, so dass immer vor der erfindungsgemäßen Beschichtung metallisch glänzende Aluminium-reiche Oberflächen vorliegen. Es werden vorzugsweise alle Behandlungsschritte unterlassen, die eine signifikante Hydroxid-/Oxidschicht und insbesondere eine dicke Hydroxid- oder/und Oxidschicht z.B. im Bereich von 0,03 bis 5 µm Schichtdicke aufbauen.

Bei dem erfindungsgemäßen Verfahren werden die metallischen Oberflächen vorzugsweise vor dem Kontaktieren mit einer Silan/Silanol/Siloxan/Polysiloxan enthaltenden wässerigen Zusammensetzung gereinigt, entfettet oder/und gebeizt.

Bei dem erfindungsgemäßen Verfahren werden vorzugsweise metallische Oberflächen auf Basis von Aluminium, Magnesium, Eisen, Stahl, Titan, Zink, Zinn oder/und deren Legierung(en) behandelt.

Vorzugsweise weisen die Verbindungen des Typs XYZ eine Alkylkette Y mit 10 bis 14 C-Atomen auf. Ganz besonders bevorzugt weist die Alkylkette Y 12 C-Atome auf. Besonders bevorzugt ist mindestens eine der Phosphonverbindungen eine Verbindung des Typs XYZ, wobei X eine COOH-, HSO₄-, (OH)₂PO-, (OH)₂PO₂-, (OH)(OR')PO- oder (OH)(OR')PO₂-Gruppe ist, wobei Y unabhängig voneinander eine unverzweigte Alkylgruppe mit 8 bis 16 C-Atomen ist oder eine Alkylgruppe mit 8 bis 16 C-Atomen ist, von denen bis zu 20 % der C-Atome der Alkylkette eine funktionelle Gruppe aufweisen, wobei Z eine (OH)₂PO-, (OH)₂PO₂-, (OH)(OR')PO- oder (OH)(OR')PO₂-Gruppe ist, wobei R' eine Alkylgruppe mit 1 bis 4 C-Atomen ist und wobei R" ein H-Atom oder eine Alkylgruppe mit 1 bis 4 C-Atomen ist. Generell sind die an die Alkylkette Y gegebenenfalls gebundenen funktionellen Gruppen vorzugsweise mindestens eine der für X genannten Gruppen unabhängig voneinander. Besonders bevorzugt liegen diese als OH-Gruppen oder als Vinylgruppen unabhängig voneinander vor. Oft sind die Verbindungen des Typs XYZ geeignet, selbst organisierende Moleküle (self assembling molecules = SAM) auszubilden, die eine Schicht dieser selbst organisierenden Moleküle auf der mit der oben genannten wässerigen Silan-haltigen Lösung beschichteten Oberfläche ausbilden können, gegebenenfalls teilweise auch in der Silanschicht. Das ist oft insbesondere eine in etwa monomolekulare Schicht. Vielfach bildet Y eine lineare unverzweigte Kette. Oft ist Y unabhängig voneinander eine lineare unverzweigte geradkettige Kette oder eine verzweigte Kette mit einer oder mit zwei funktionellen Gruppen. Oft weisen die besonders vorteilhaften Verbindungen des Typs XYZ eine Gruppe Y auf, die eine gerade Zahl von C-Atomen hat. In manchen Ausführungsformen kann mindestens eine Verbindung des Typs XYZ in einer wässerigen Lösung als Salz, Ester oder/und Säure vorliegen. Meistens liegt die mindestens eine Verbindung des Typs XYZ vorwiegend als Säure oder als Salz vor, wobei oft noch geringe Gehalte an Ester(n) auftreten können. Besonders bevorzugt ist die Gruppe Y der besonders vorteilhaften Verbindungen des Typs XYZ eine unverzweigte geradkettige Alkylgruppe mit 8 bis 16 oder 10 bis 14 oder 12 C-Atomen. Vorzugsweise sind in einem Gemisch mit mehreren Phosphonaten die Verbindungen des Typs XYZ anteilig nach Gewicht so enthalten, dass letztere Alkylketten mit einer durchschnittlichen Zahl an C-Atomen im Bereich von 9 bis 14, besonders bevorzugt im Bereich von 10 bis 13 oder von 11 bis 12,5 oder von näherungsweise etwa 12 C-Atomen aufweisen. Vorzugsweise sind mindestens 95 % oder 100 % aller (Moleküle der) Phosphonverbindungen ausgewählt aus Verbindungen des Typs XYZ. Besonders bevorzugt ist mindestens eine Verbindung des Typs XYZ, bei der X eine (OH)₂PO₂- oder (OH)(OR')PO₂-Gruppe ist. Ganz besonders bevorzugt ist mindestens eine der folgenden Verbindungen des Typs XYZ oder/und mindestens eines der entsprechenden Derivate, insbesondere deren Salze oder/und deren Ester:
1,8-Octandiphosphonsäure,
1,10-Decandiphosphonsäure,
1,12-Dodecandiphosphonsäure,
1,12-Dodecandiphosphonsäure mit ca. 8 % Vinylgruppen an der Alkylkette Y,
1,14-Tetradecandiphosphonsäure,
1-Phosphonsäure-12-Mercapto-dodecan,
1-Phosphonsäure-8-(N-ethylamino)-octan,
1-Phosphonsäure-10-(N-ethylamino)-decan,
1-Phosphonsäure-12-(N-ethylamino)-dodecan,
1-Phosphonsäure-14-(N-ethylamino)-tetradecan,
1-Phosphonsäure-12-Carboxyl-dodecan,
1-Phosphonsäure-12-Hydroxy-dodecan,
1-Phosphonsäure-8-Amino-octan,
1-Phosphonsäure-10-Amino-decan,
1-Phosphonsäure-12-Amino-dodecan,
1-Phosphonsäure-14-Amino-tetradecan,
1-Phosphonsäure-12-Acryloyl-dodecan.

In manchen Ausführungsformen ist mindestens eine Verbindung des Typs XYZ in einer wässerigen Lösung enthalten, bei der insbesondere 0,01 bis 50 Gew.-% des Wassers durch mindestens ein organisches Lösemittel wie z.B. einen Alkohol mit 1 bis 8 C-Atomen, durch Aceton, durch Dioxan oder/und durch Tetrahydrofuran ersetzt ist.

Vorzugsweise weist die Phosphonverbindung aufweisende wässerige Zusammensetzung mindestens eine Verbindung des Typs XYZ auf in einer Konzentration im Bereich von 0,0008 bis 10 g/L, besonders bevorzugt im Bereich von 0,004 bis 5 g/L, vor allem im Bereich von 0,04 bis 0,5 g/L. Bevorzugt liegt der Gesamtgehalt an Phosphonverbindungen in der Phosphonverbindung enthaltenden wässerigen Zusammensetzung im Bereich von 0,001 bis 10 g/L, besonders bevorzugt im Bereich von 0,005 bis 5 g/L, vor allem im Bereich von 0,05 bis 0,5 g/L. In vielen Ausführungsformen weist die Phosphonverbindung aufweisende wässerige Zusammensetzung mindestens eine Verbindung des Typs XYZ auf, die im Bereich der kritischen Mizellbildungskonzentration oder unterhalb liegt.

In manchen Ausführungsformen enthält die Phosphonverbindung aufweisende wässerige Zusammensetzung mindestens eine Verbindung des Typs XYZ, die in der Lösung als Salz vorliegt. In einzelnen Ausführungsformen weist die Phosphonverbindung aufweisende wässerige Zusammensetzung im Wesentlichen nur oder nur Verbindungen des Typs XYZ - gegebenenfalls einschließlich mindestens eines der entsprechenden Derivate - neben mindestens einem Lösemittel wie z.B. Wasser auf. Vorzugsweise ist die mindestens eine Phosphonverbindung in einem Gehalt von 0,005 bis 10 g/L in Wasser oder in einem Wasser-Lösemittel-Gemisch enthalten, besonders bevorzugt in einem Gehalt von 0,05 bis 1 oder von 0,1 bis 0,6 g/L. Daneben können insbesondere Tenside zugesetzt werden. Vorzugsweise enthält die mindestens eine Phosphonverbindung enthaltende wässerige Zusammensetzung mindestens eine Phosphonverbindung auf Basis von Phosphonsäure, Diphosphonsäure, deren Estern oder/und deren Salzen.

In manchen Ausführungsformen enthält die Phosphonverbindung aufweisende wässerige Zusammensetzung neben Wasser oder neben einem Wasser-Lösemittelgemisch und neben mindestens einer Verbindung des Typs XYZ gegebenenfalls mindestens ein Biozid, mindestens ein Demulgator, mindestens ein Duftstoff, mindestens ein Emulgator, mindestens ein Entschäumer, mindestens ein Lösungsvermittler, mindestens ein Tensid, mindestens ein Mittel zur Anpassung des pH-Werts, mindestens ein Mittel zur Anpassung der elektrischen Leitfähigkeit, mindestens ein sonstiger Hilfsstoff, mindestens ein organisches Oligomer, mindestens ein organisches Polymer, mindestens ein organisches Copolymer, mindestens ein Amin oder/und mindestens einen Komplexbildner enthalten. Sie kann Substanzen von jeder dieser eben genannten Zusatzstoffe in einem Gehalt von jeweils 0,0005 bis 5 g/L und besonders bevorzugt in einem Gehalt von jeweils 0,001 bis 2 oder von 0,1 bis 0,8 g/L enthalten, bei den organischen Oligomeren, organischen Polymeren und organischen Copolymeren jedoch in einer Menge von jeweils 0,0005 bis 5 g/L, wobei die Summe alle diese Zusatzstoffe in einer kleineren Menge als die Gesamtmenge an Phosphonverbindungen in der erfindungsgemäßen Phosphonverbindung(en) enthaltenden Lösung vorliegt. Der Gehalt der mindestens eine Phosphonverbindung enthaltenden wässerigen Zusammensetzung an Kationen von Aluminium, Magnesium oder/und Titan liegt vorzugsweise im Bereich von etwa 0 oder etwa 5 bis 500 mg/L für jede Kationenart.

Vorzugsweise weist die mindestens eine Phosphonverbindung enthaltende wässerige Zusammensetzung einen pH-Wert im Bereich von 1,5 bis 9,0, besonders bevorzugt im Bereich von 2,0 bis 4,0 auf. Vorzugsweise weist die mindestens eine Phosphonverbindung enthaltende wässerige Zusammensetzung beim Kontaktieren der metallischen Oberfläche eine Temperatur im Bereich von 5 bis 80 °C auf, besonders bevorzugt im Bereich von 20 bis 65 °C. Vorzugsweise wird die mindestens eine Phosphonverbindung enthaltende wässerige Zusammensetzung durch Tauchen, Spritzen, Sprühen oder Vernebeln aufgebracht. Außerdem ist es bevorzugt, dass die Phosphonat-Beschichtung mit mindestens einer Schicht von einem Primer, einem Lack oder/und einem Klebstoff überzogen wird.

Die Phosphonverbindung enthaltende wässerige Zusammensetzung wird vorzugsweise durch Tauchen oder/und Walzen, insbesondere durch Spritzen, Sprühen oder Vernebeln, auf den vorbeschichteten metallischen Oberflächen aufgebracht, insbesondere über eine Zeit im Bereich von 0,1 bis 120 Sekunden.

Es war überraschend, dass bei einer Beschichtung zuerst mit Phosphonat(en) und anschließend mit Silan(en) die Korrosions- und Lackhaftungstest schlechter waren, als wenn zuerst mit Silan(en) und anschließend mit Phosphonat(en) beschichte wurde.

Es war weiterhin überraschend, dass bei allen Versuchen, bei der die Beschichtung in der ersten Stufe mit Silan(en) und im zweiten Schritt mit Phosphonat(en) erfolgte, die Korrosions- und Lackhaftungstest immer deutlich besser oder sogar sehr viel besser waren, als wenn nur in einer Stufe mit Silan(en) oder Phosphonat(en) behandelt wurde, wenn die gleichen Silan- oder die gleichen Phosphonat-Lösungen für den jeweiligen Vergleich verwendet wurden.

Es war ferner überraschend, dass sich in einer Titan- und Zirkoniumfluorid enthaltenden wässerigen Lösung, wenn der Silan-Gehalt der wässerigen Silan-Zusammensetzung bei konstant gehaltenem Ti- und Zr-Gehalt verringert oder sogar weggelassen wird, bei gleichem anorganischen Anteil, sich die Abscheidung von Titan von 36 mg/m² auf 40 mg/m² und die Abscheidung von Zirkonium von 21 mg/m² auf 23 mg/m² nur wenig erhöht hat. Aber das Aussehen der Konversionsbeschichtungen änderte sich dabei gleichzeitig von transparent und hoch glänzend (sehr gut) (B 25) auf weiß-matt, teilweise auf sehr matt (sehr schlecht) (VB 43). Somit ist eine nicht verkaufsfähige Oberflächenqualität entstanden. Daher ist es für eine gute Oberflächenqualität erforderlich, dass der Gehalt an Silan in der wässerigen Lösung mindestens 0,01 g/L beträgt.

Die erfindungsgemäß beschichteten metallischen Substrate und die erfindungsgemäß beschichteten metallischen Produkte können insbesondere im Automobilbau, Fahrzeugbau, Flugzeugbau oder/und Fassadenbau verwendet werden. Vor allem können die erfindungsgemäß beschichteten metallischen Produkte für die Herstellung von Rädern aus einer Aluminiumlegierung verwendet werden. Hierbei werden die erfindungsgemäßen Konversionsbeschichtungen insbesondere gleichzeitig als Korrosionsschutz und als Haftvermittler verwendet.

### Beispiele und Vergleichsbeispiele:

Die im Folgenden beschriebenen erfindungsgemäßen Beispiele (B) und die Vergleichsbeispiele (VB) sollen den Gegenstand der Erfindung näher erläutern.

Als Prüfkörper werden Radabschnitte (= Speichen) aus der Aluminiumlegierung Al-Si7, die für Aluminium-Räder im Automobilbau üblicherweise verwendet werden, eingesetzt. Die beschichtete Fläche der Substrate betrug meistens etwa 100 cm² (über alle Flächen gemessen).

Die wässerigen Badzusammensetzungen werden als Gemische entsprechend Tabelle A unter Verwendung von bereits vorhydrolysierten Silanen hergestellt. Sie enthalten jeweils vorwiegend ein Silan und gegebenenfalls auch geringe Gehalte an mindestens einem ähnlichen weiteren Silan, wobei auch hier vereinfachend von Silan und nicht von Silan/Silanol/Siloxan/Polysiloxan gesprochen wird und wobei sich in der Regel diese Vielfalt an Verbindungen, teilweise in größerer Zahl ähnlicher Verbindungen, auch bis in die Ausbildung der Beschichtung hindurchzieht, so dass auch in der Beschichtung oft mehrere ähnliche Verbindungen vorliegen. Das Vorhydrolysieren kann je nach Silan auch über mehrere Tage bei Raumtemperatur unter kräftigem Rühren andauern, soweit die einzusetzenden Silane nicht bereits vorhydrolysiert vorliegen. Zum Vorhydrolysieren des Silans wird das Silan in Wasser im Überschuss gegeben und gegebenenfalls z.B. mit Essigsäure katalysiert. Allein wegen des Einstellens des pH-Wertes wurde Essigsäure nur bei einzelnen Ausführungsvarianten zugesetzt. In einigen Ausführungsvarianten ist Essigsäure als Katalysator für die Hydrolyse bereits enthalten. Ethanol entsteht bei der Hydrolyse, wird aber nicht zugesetzt. Das fertige Gemisch wird frisch eingesetzt.

Es werden jeweils pro Versuch mindestens fünf zuvor mit einem wässerigen alkalischen Reiniger gereinigte und mit Brauchwasser gespülte glanzgedrehte Aluminiumradabschnitte in Form von Speichen der Aluminiumlegierung AlSi7, wie sie für Aluminium-basierte Gussräder üblicherweise verwendet wird, gereinigt. Je nach Variante werden die Teile mit einer sauren Beize auf Salpetersäure- oder Schwefelsäurebasis mit Fluorid gebeizt und mit VE-Wasser gespült. Anschließend werden die Speichen der Räder mit der entsprechenden Vorbehandlungsflüssigkeit der Tabelle A bei 30 °C bis 50 °C durch Spritzen in Kontakt gebracht. Dann werden die Teile mit VE-Wasser gespült. Die derart behandelten Speichen werden teilweise bei 140 °C PMT getrocknet und anschließend mit einem klaren Acrylpulverlack lackiert.

Oder es erfolgt eine Weiterbehandlung (nass in nass) der Speichen. Die Speichen werden nach der Behandlung mit der entsprechenden Vorbehandlungsflüssigkeit der Tabelle A bei 30 °C bis 50 °C durch Spritzen behandelt und dann bei Raumtemperatur im feuchten Zustand die entstandene Beschichtung mindestens einmal mit VE-Wasser gespült.

Jedes Silan, das der Silan enthaltenden Lösung zugegeben wurde, wurde vorher teilweise oder vollständig hydrolysiert. Die Silane liegen in der wässerigen Lösung weitgehend oder in etwa vollständig hydrolysiert vor. Gegebenenfalls wurde der pH-Wert mit einem Additiv wie z.B. Natronlauge oder Essigsäure insbesondere zur Hydrolyse eingestellt. Die Zusammensetzungen der Silan-Zusammensetzungen werden in den Tabellen A aufgeführt.

### Silan-Typen:

| | |
|---|---|
| 1 | Bis(3-triethoxysilylpropyl)amin |
| 2 | Aminopropyltriethoxysilan |
| 3 | Am inopropyltrimethoxysilan |
| 4 | N-beta-(aminoethyl)-gamma-aminopropyltriethoxysilan |
| 5 | 3-Aminopropyltrimethoxysilan |
| 6 | N-(n-butyl)-3-Aminopropyltrimethoxysilan |
| 7 | 2-Aminoethyl-3-aminopropylmethyldimethoxysilan |
| 8 | Bis-(3-trimethoxysilylpropyl)amin |
| 9 | 3-Ureidopropyltriethoxysilan |
| 10 | N-(2-Aminoethyl)-3-aminopropyltrimethoxysilan. |

Die Komplexfluoride von Titan oder/und Zirkonium in Form von mindestens einer Säure oder/und von mindestens einem Salz werden weitgehend auf der Basis eines MeF₆-Komplexes eingesetzt. Die Komplexfluorid-Lösung wird der wässerigen Silan-Zusammensetzung beigemischt. Darüber hinaus kann bei Silicium-haltigen metallischen Oberflächen aufgrund des Beizeffekts zusätzlich auch ein geringer Gehalt an Komplexfluoriden auf Basis von Silicium gebildet werden.

Ein Zusatz von einem Mangansalz zur wässerigen Silan-Zusammensetzung hatte sich bei einem Vorversuch erstaunlicherweise als nachteilig erwiesen und wurde daher in weiteren Versuchen weggelassen.

Die in der wässerigen Zusammensetzung - Konzentrat oder/und Bad - enthaltenen Silane sind Monomere, Oligomere, Polymere, Copolymere oder/und Reaktionsprodukte mit weiteren Komponenten aufgrund Hydrolysereaktionen, Kondensationsreaktionen oder/und weiteren Reaktionen.

Die Reaktionen erfolgen vor allem in der Lösung, bei Reaktionen zwischen der Schicht aus Tabelle A und Tabelle B, beim Trocknen bzw. gegebenenfalls auch beim Härten der Beschichtung, insbesondere bei Temperaturen über 70 °C. Alle Konzentrate und Bäder erwiesen sich über eine Woche als stabil und ohne Veränderungen und ohne Ausfällungen. Es wurde kein Ethanol zugesetzt. Gehalte an Ethanol in den Zusammensetzungen rührten nur aus chemischen Reaktionen.

Die Zusammensetzungen und Eigenschaften der Behandlungsbäder sowie die Eigenschaften der Beschichtungen werden in den Tabellen A bis C zusammengefasst. Der pH-Wert der Silan-Zusammensetzungen wird bei den meisten Beispielen und Vergleichsbeispielen eingestellt, bei Anwesenheit von mindestens einem Komplexfluorid mit Ammoniak, in anderen Fällen mit einer Lauge. Alle Bäder zeigen eine gute Qualität der Lösung und fast immer eine gute Badstabilität. Es haben sich manchmal leichte Ausfällungen in den Bädern gezeigt. Nach dem Beschichten mit der Silan-haltigen Lösung wird die Silan enthaltende Beschichtung ohne stärkeres Trocknen zuerst einmal mit VE-Wasser gespült. Danach werden die beschichteten Speichen teilweise bei 160 °C im Trockenschrank über 20 Minuten getrocknet.

Oder es erfolgt eine Weiterbehandlung (nass in nass) der Speichen. Die Speichen werden nach dem Spülen mit VE-Wasser mit der Phosphonat-haltigen Lösung bei 55 °C durch Spritzen, in Kontakt gebracht. Es wurden hierzu meistens Phosphonat-Zusammensetzungen ohne weitere Zusatzstoffe angesetzt. Die Zusammensetzungen der Phosphonat-Zusammensetzungen werden in Tabelle B aufgeführt.

### Phosphonat-Typen:

| | |
|---|---|
| 1 | 1-Phosphonsäure-12-dodecen |
| 2 | 1,12-Dodecandiphosphonsäure mit ca. 8 % Vinylgruppen an der Alkylkette Y |
| 3 | 1,10-Decandiphosphonsäure |
| 4 | 1,8-Octandiphosphonsäure |
| 5 | 1-Phosphonsäure-8-(N-ethylamino)-octan |
| 6 | 1-Phosphonsäure-10-(N-ethylamino)-decan |
| 7 | 1-Phosphonsäure-12-(N-ethylamino)-dodecan |
| 8 | 1-Phosphonsäure-12-Hydroxy-dodecan |
| 9 | 1-Phosphonsäure-10-Amino-decan |
| 10 | 1-Phosphonsäure-12-Amino-dodecan. |

Alle Bäder zeigen eine gute Qualität der Lösung und immer eine gute Badstabilität. Dann werden die Teile mit VE-Wasser gespült. Danach werden die beschichteten Speichen bei 160 °C im Trockenschrank über 20 Minuten und anschließend mit einem klaren Acrylpulverlack lackiert.

Die visuelle Prüfung der Beschichtungen lässt die Gleichmäßigkeit der Beschichtung beurteilen. Es dürfen keine oder kaum Markierungen oder Abläufer (= Läufer, oft in der Form von weißlichen, etwas dickeren und länglichen Verfärbungen) zu sehen sein. Die optische Qualität darf - zumindest nach dem Aufbringen von mindestens einem Klarlack oder von mindestens einem Pulverklarlack - nicht im Vergleich zu den abgedrehten Aluminiumlegierungsoberflächen verschlechtert werden. Danach wurden die Speichen auf ihren Korrosionsschutz und ihre Lackhaftung geprüft.

Die Beispiele wurden unter Verwendung der im Folgenden aufgeführten Verfahrensschritte durchgeführt:

### Ablaufschema 1: Beize auf Basis von Salpetersäure + Silan + Phosphonat

a) Die Substratoberflächen wurden in einer 5 %-igen Lösung eines mildalkalischen Reinigers über 3 Minuten bei 65 °C gereinigt und hierbei gründlich entfettet.
b) Es folgte eine Spülung mit Leitungswasser über 1,0 Minuten bei Raumtemperatur.
c) Danach wurde mit einer Beize aus einer 5-%igen Lösung auf Basis von Salpetersäure und Fluorid über 1 Minute bei 30 °C behandelt.
d) Danach folgte ein Spülen mit vollentsalztem Wasser über 1 Minute.
e) Dann wurden die Oberflächen durch Spritzen einer Silan enthaltenden Lösung über 1 Minute bei Temperaturen im Bereich von Raumtemperatur bis 50 °C beschichtet. Die Silan enthaltenden Lösungen und Anwendungsparameter werden in Tabelle A wiedergegeben.
f) Dann wurde zuerst mit vollentsalztem Wasser über 1 Minute gespült.
g) Danach wurden die beschichteten Oberflächen über 1 Minute bei 55 °C durch Spritzen einer Phosphonat enthaltenden Lösung beschichtet. Die verwendeten Phosphonat enthaltenden Lösungen werden in Tabelle B wiedergegeben.
h) Danach folgte ein Spülen mit vollentsalztem Wasser über 1 Minute.
i) Dann wurden die beschichteten Substrate im Trockenofen bei 160 °C über 20 Minuten getrocknet.
j) Schließlich wurden die trockenen Prüfkörper mit einem Pulverklarlack auf Basis von Acrylat versehen, welcher dem in der Automobilzulieferindustrie für Aluminium-Räder üblichen Lackaufbau entspricht. Der gesamte 1-schichtige Lackaufbau hatte eine Schichtdicke von 80-120 µm und war klar und farblos.

### Ablaufschema 2: Beize auf Basis von Schwefelsäure + Silan + Phosphonat

Der Verfahrensablauf wich nur dadurch vom Ablaufschema 1 ab, dass mit einer Beize aus einer 2,7-%igen Lösung auf Basis von Schwefelsäure und Fluorid behandelt wurde.

### Ablaufschema 3: Beize auf Basis von Salpetersäure + Silan (für Vergleichsbeispiele)

Der Verfahrensablauf wich nur dadurch vom Ablaufschema 1 ab, dass die Schritte g) und h) entfallen.

### Ablaufschema 4: Beize auf Basis von Salpetersäure + Phosphonat + Silan (für Vergleichsbeispiele)

Der Verfahrensablauf wich nur dadurch vom Ablaufschema 1 ab, dass die Reihenfolge der Schritte e) und g) vertauscht sind.

### Ablaufschema 5: Beize auf Basis von Schwefelsäure + Phosphonat + Silan (für Vergleichsbeispiele)

Der Verfahrensablauf wich nur dadurch gegenüber dem Ablaufschema 1 ab, dass mit einer Beize aus einer 2,7-%igen Lösung auf Basis von Schwefelsäure und Fluorid behandelt wurde und dass die Reihenfolge der Schritte e) und g) vertauscht sind.

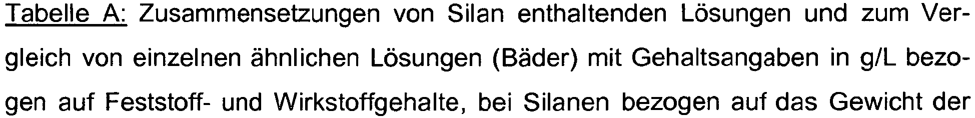

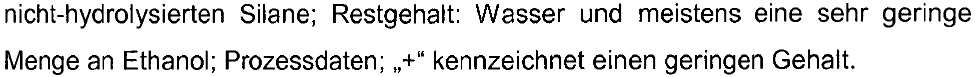

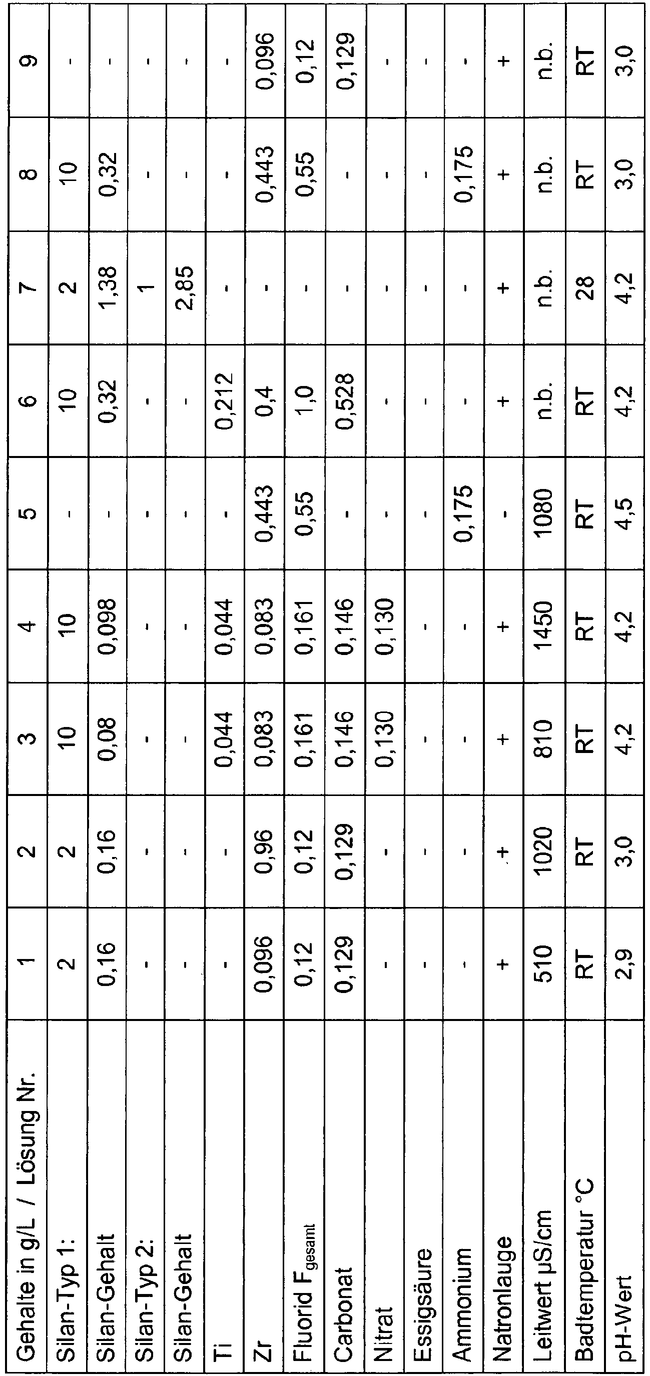

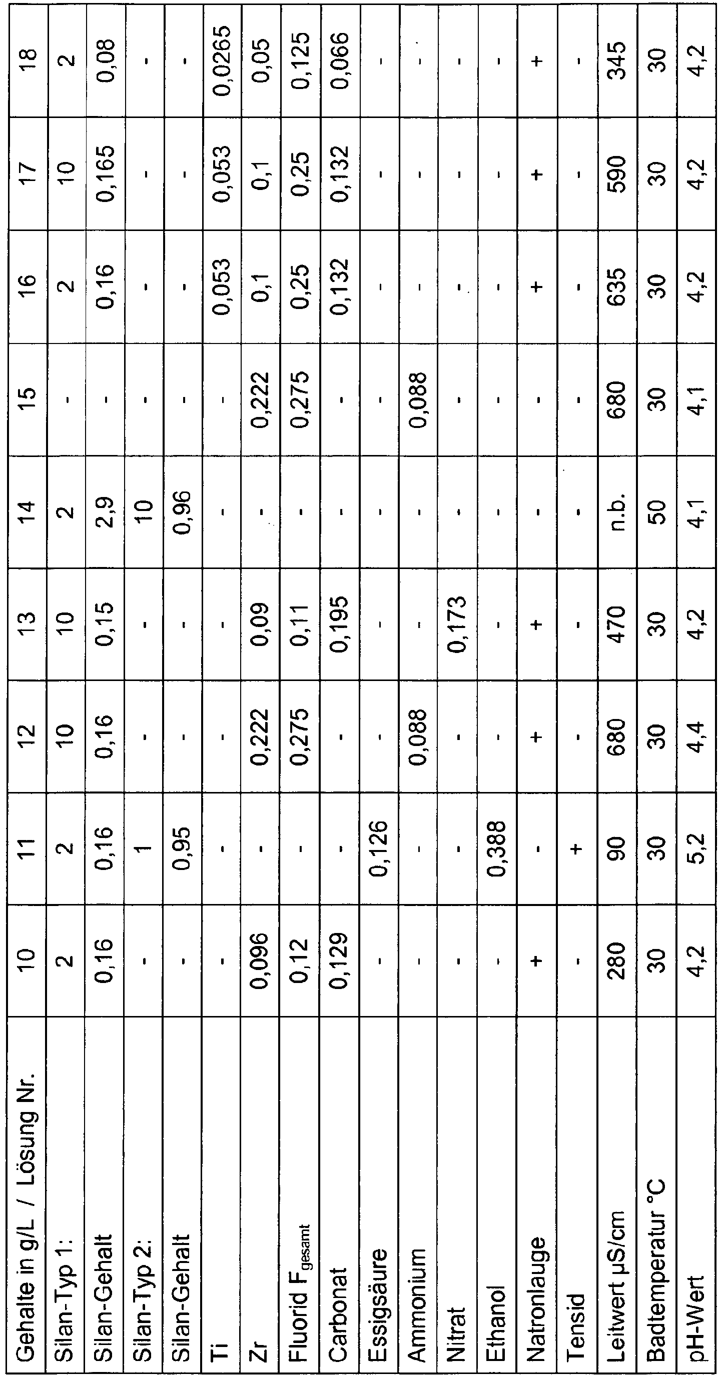

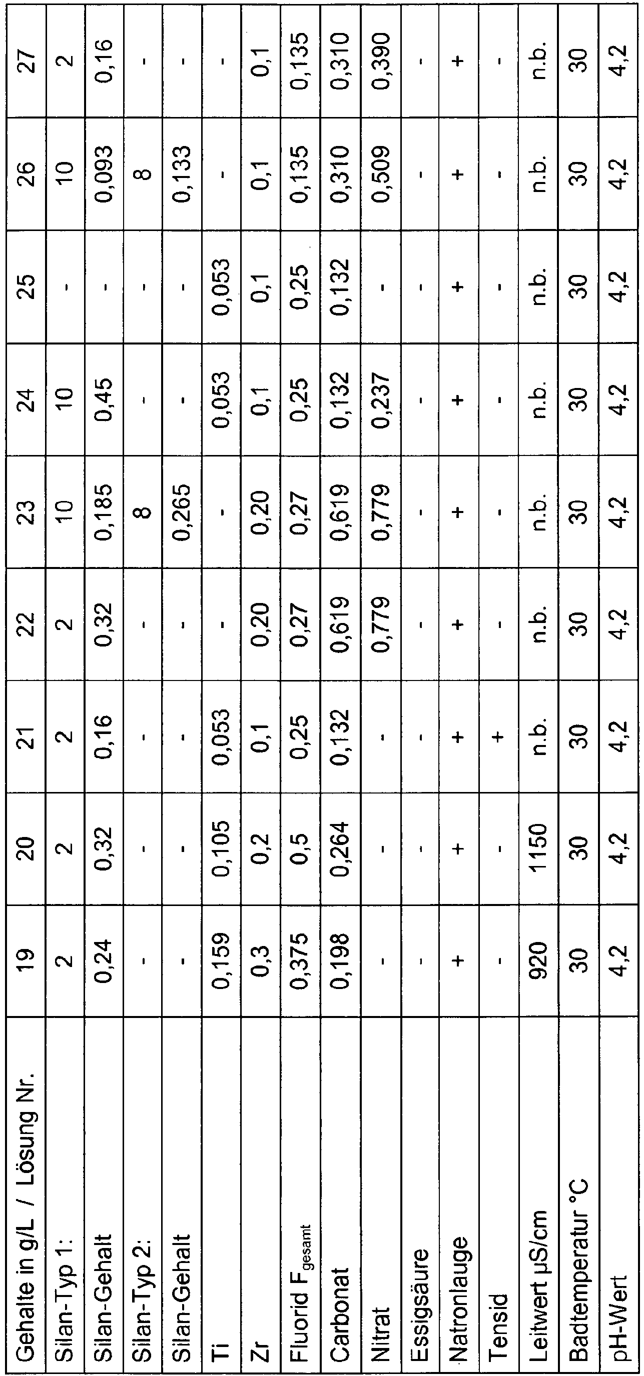

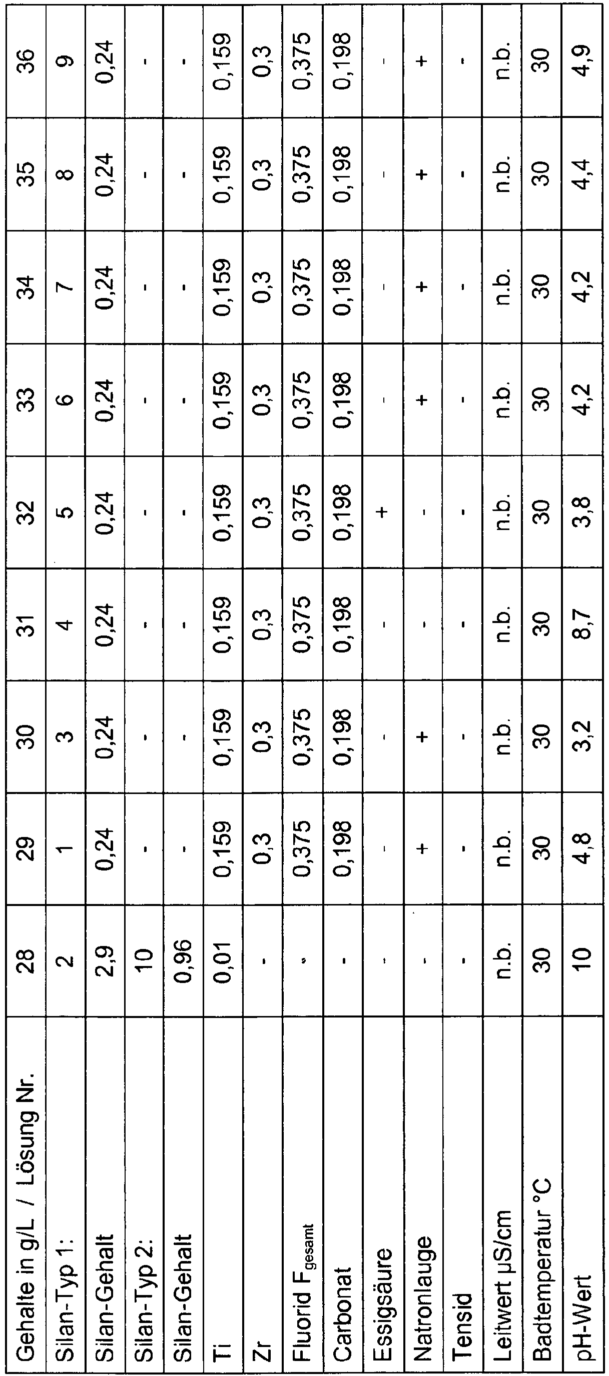

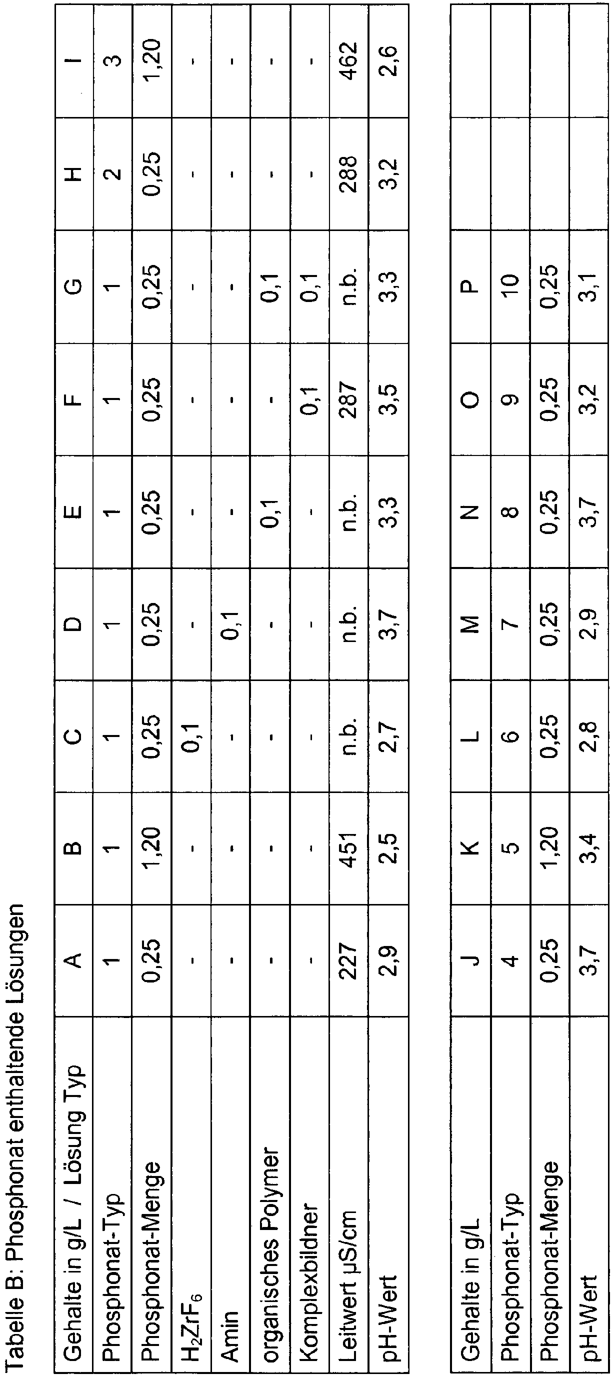

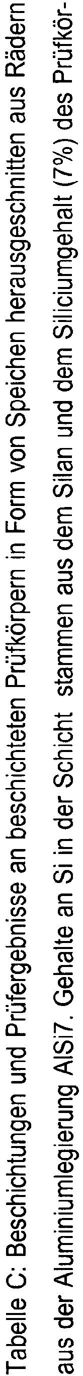

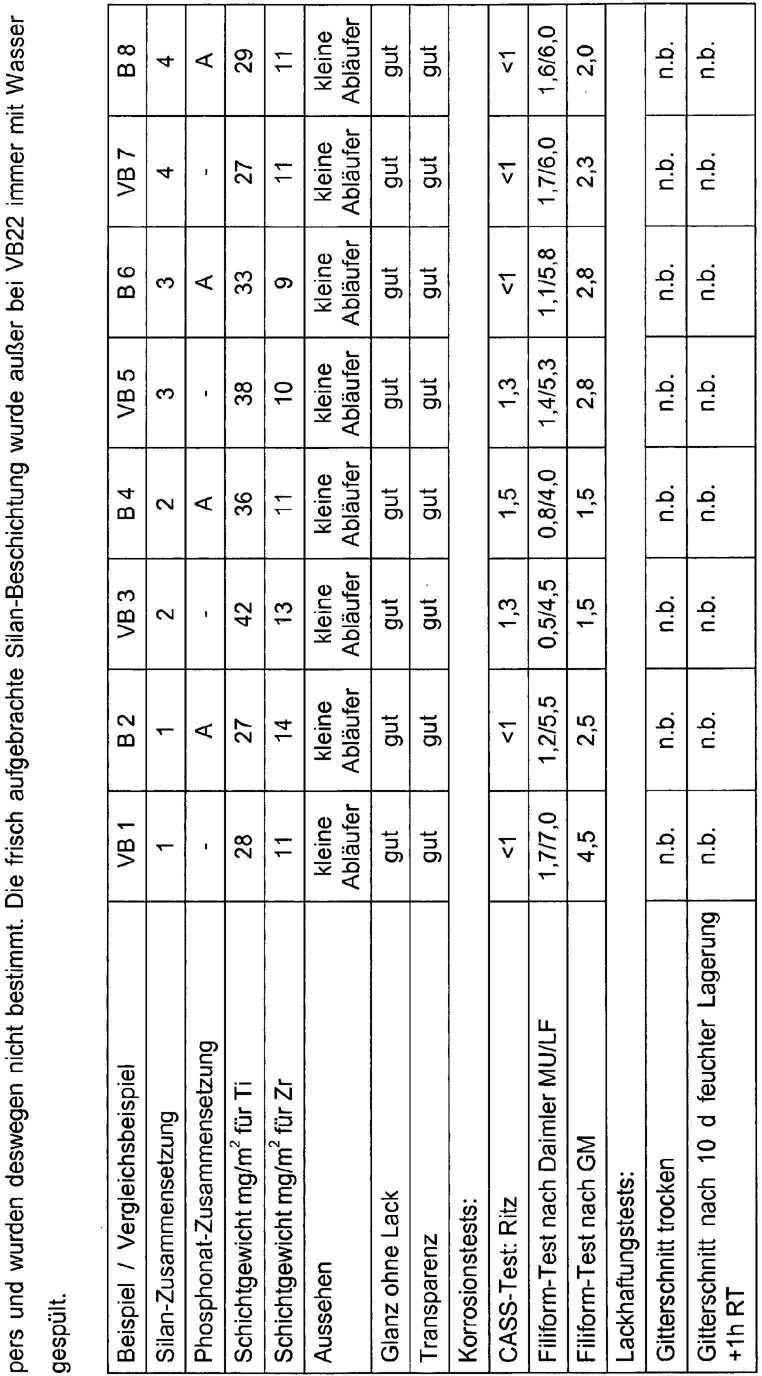

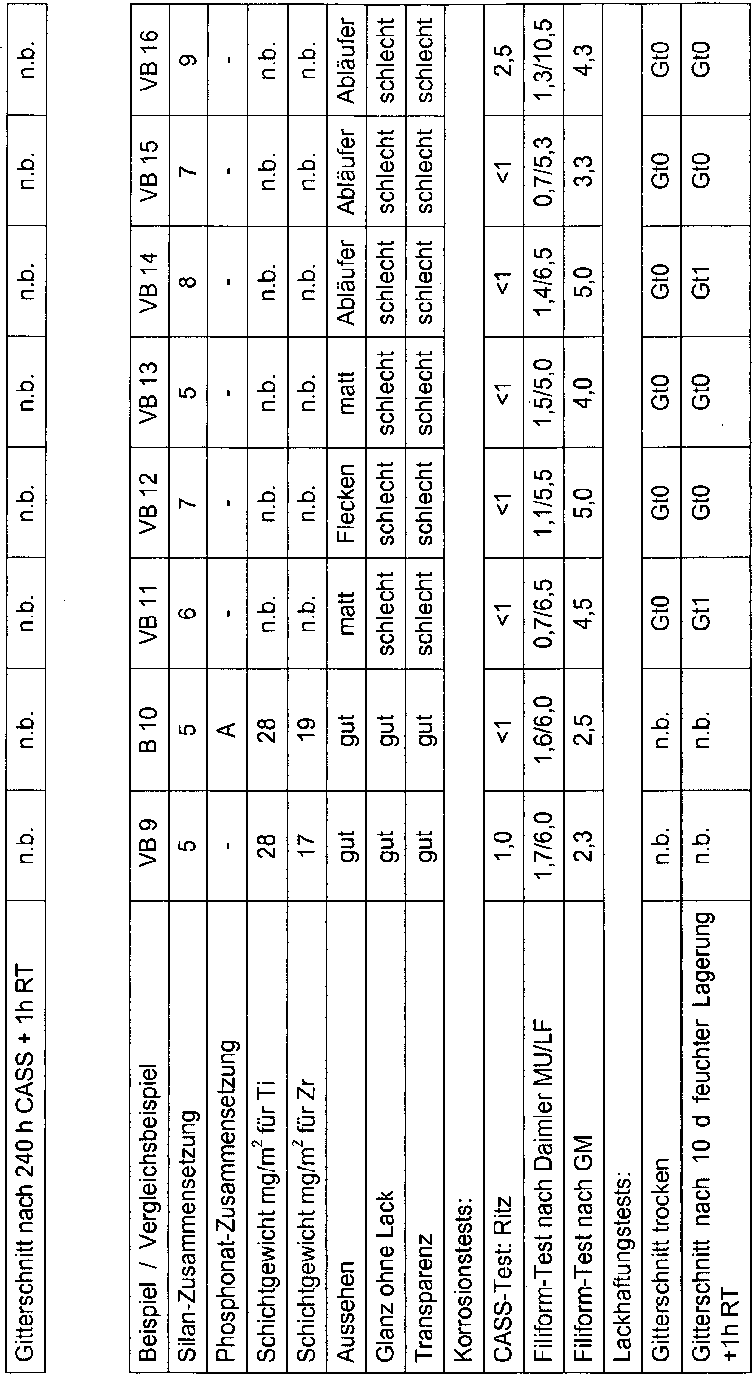

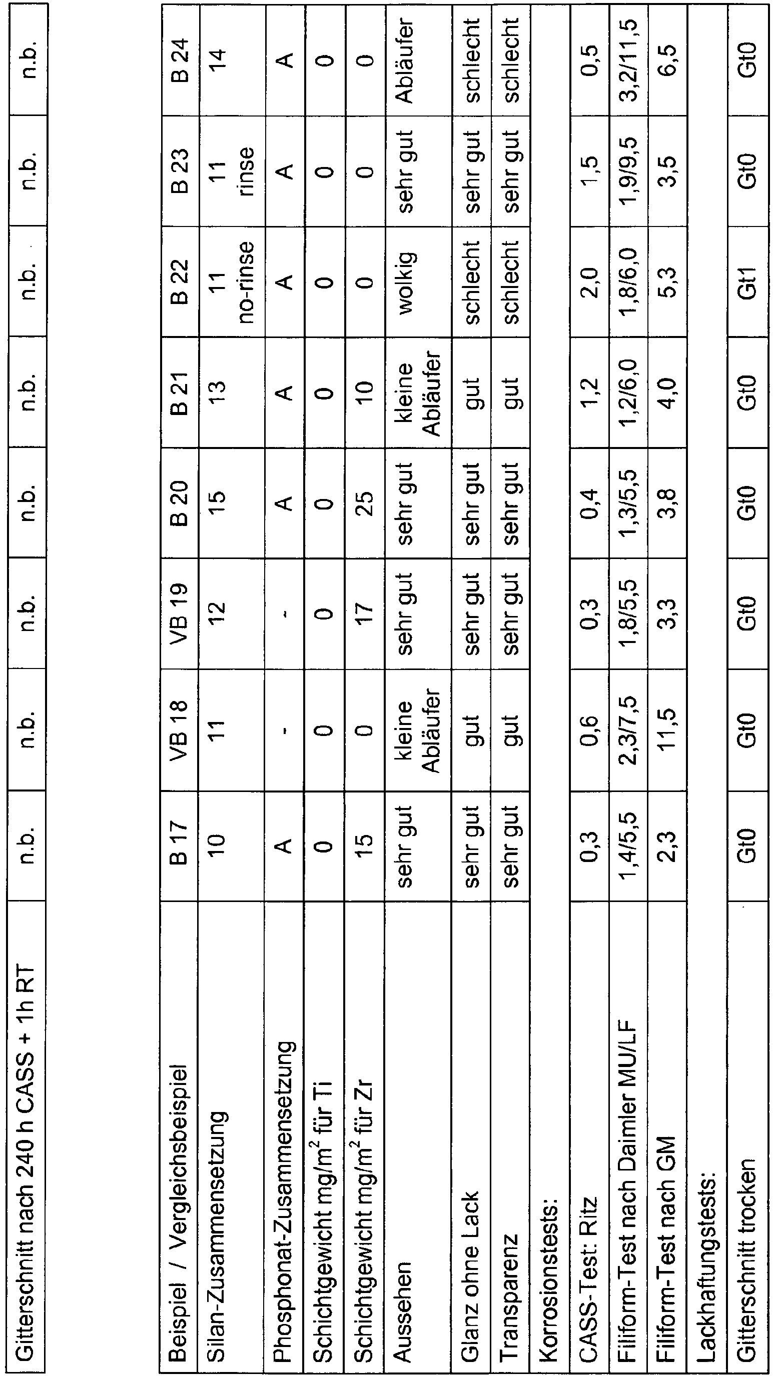

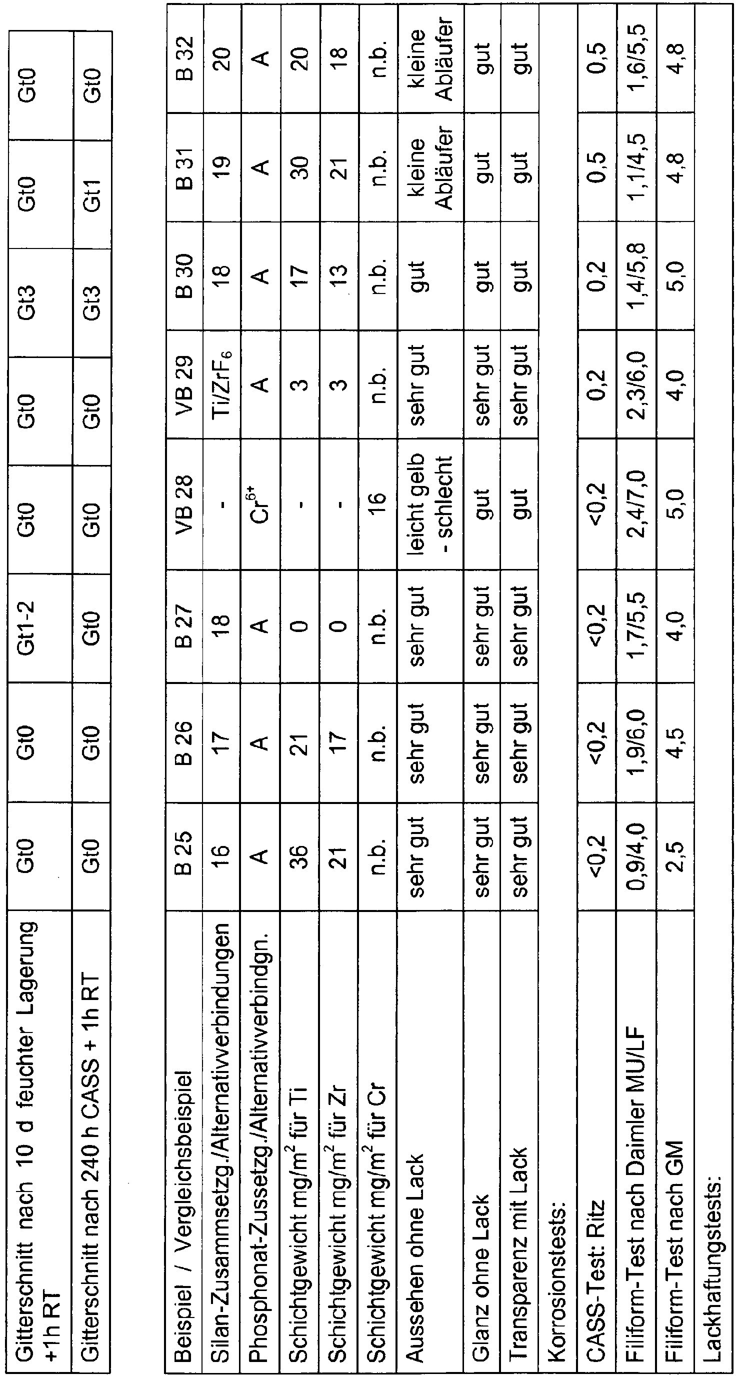

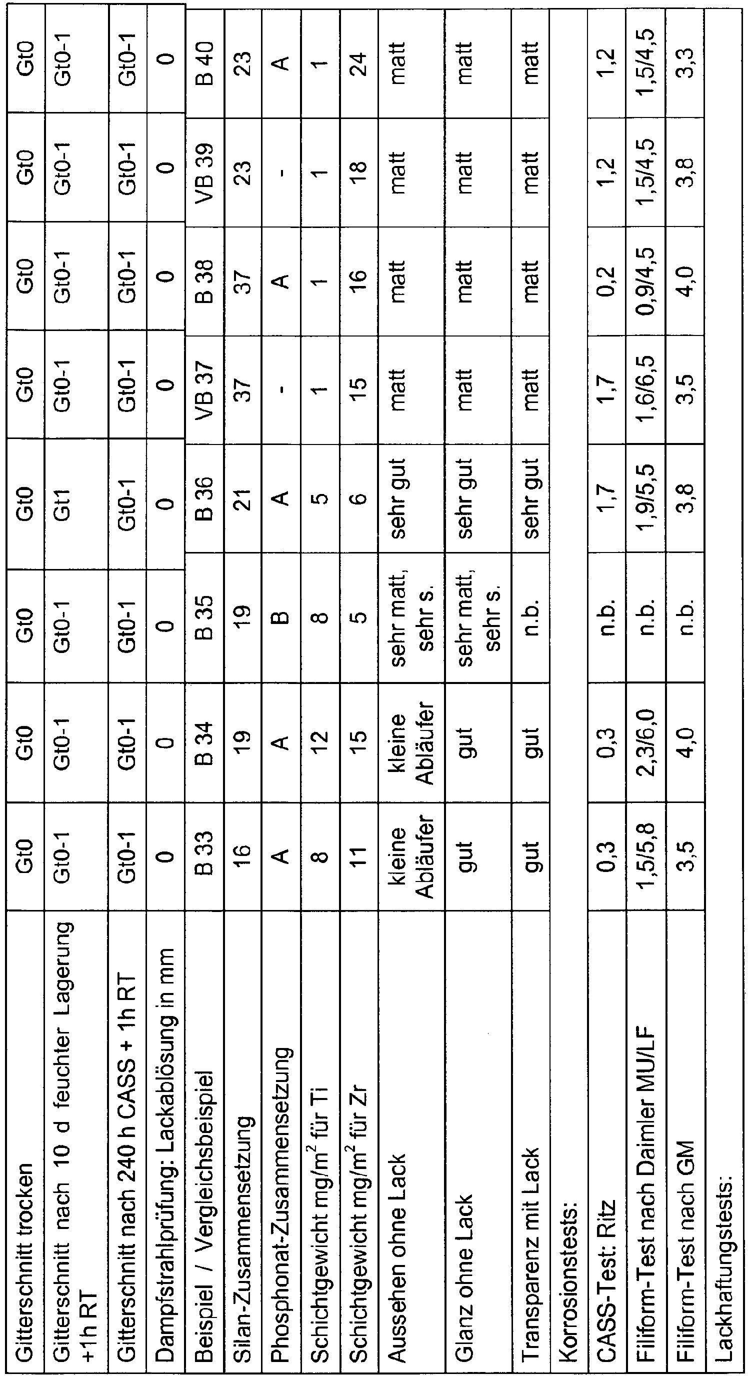

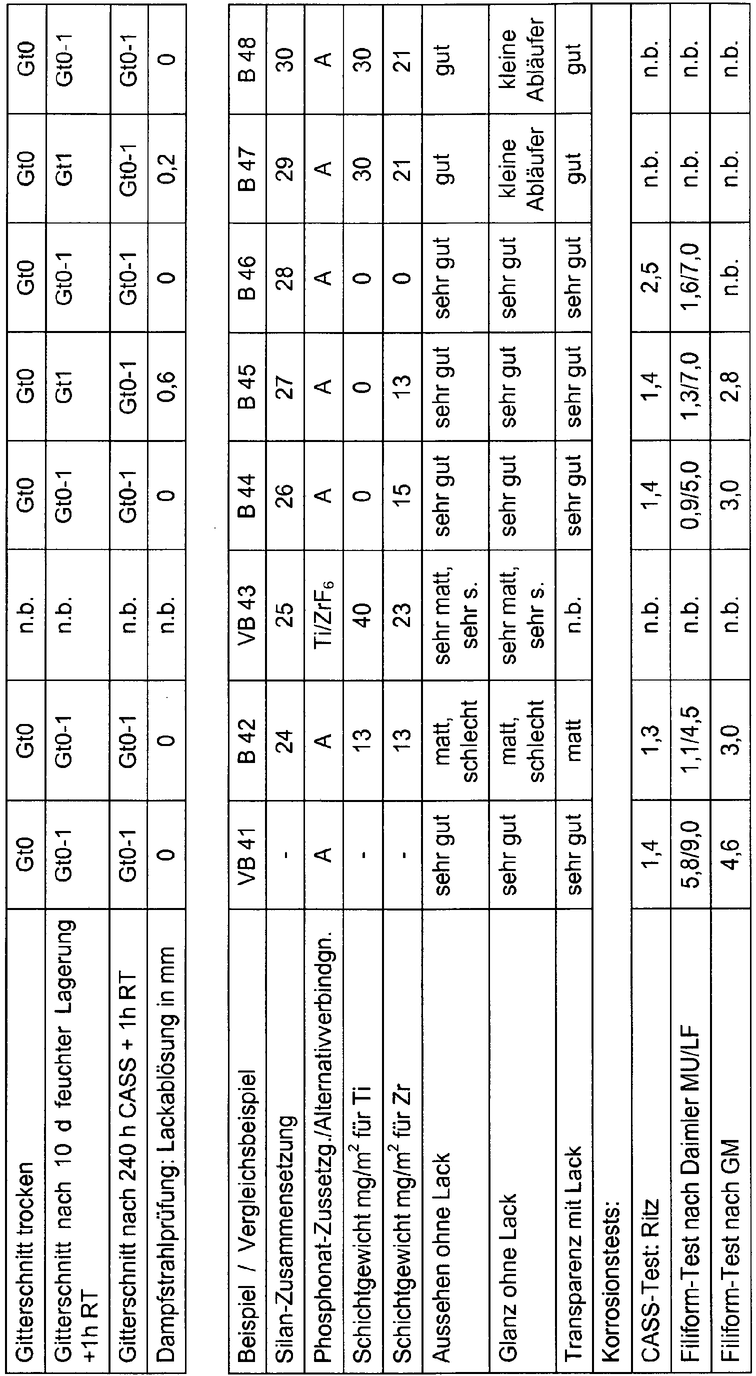

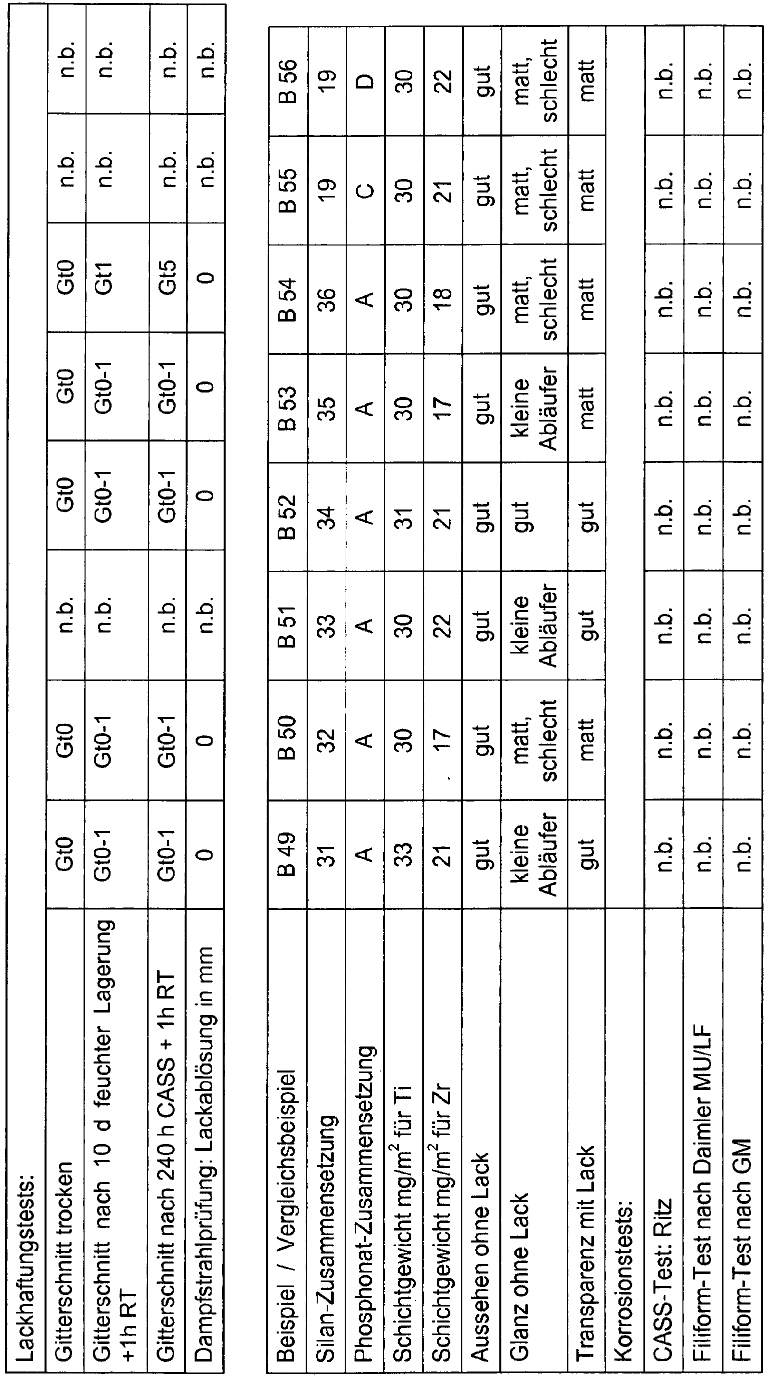

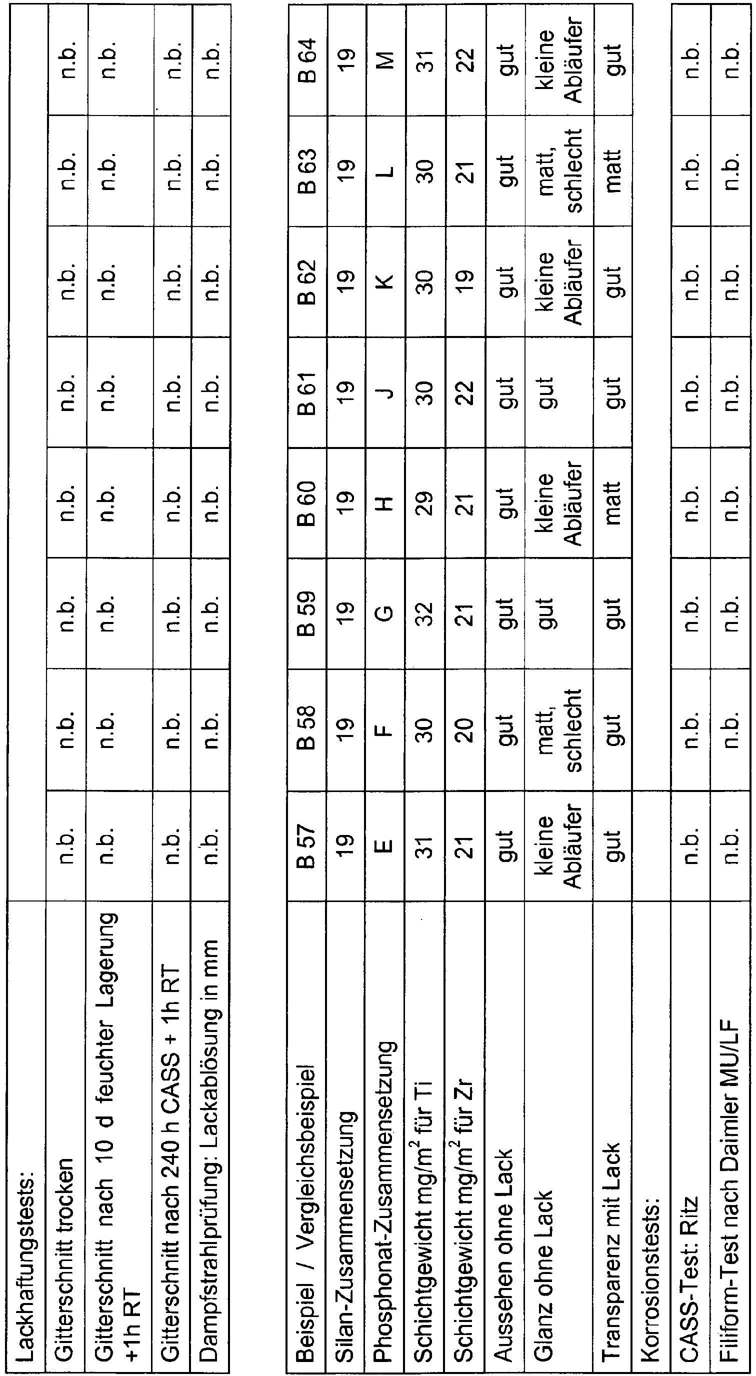

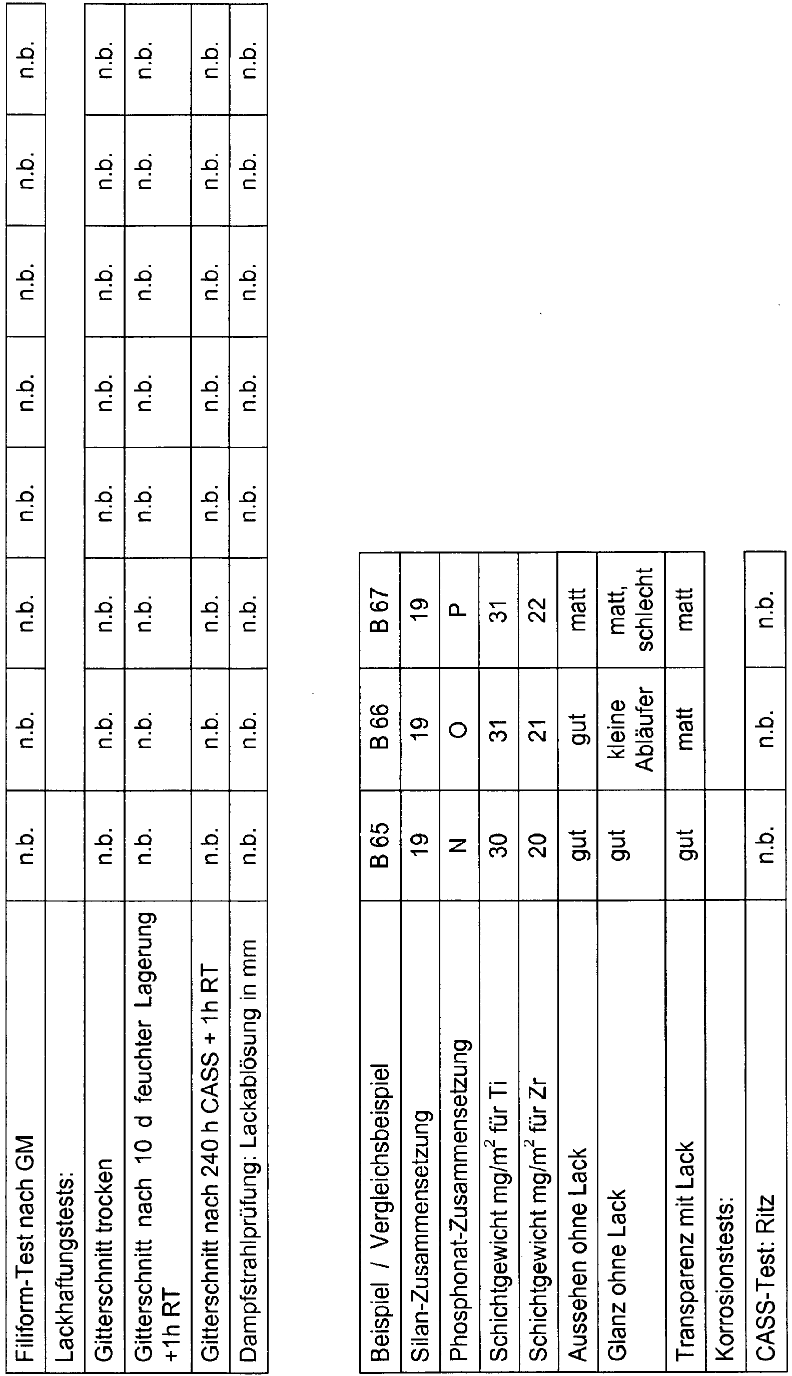

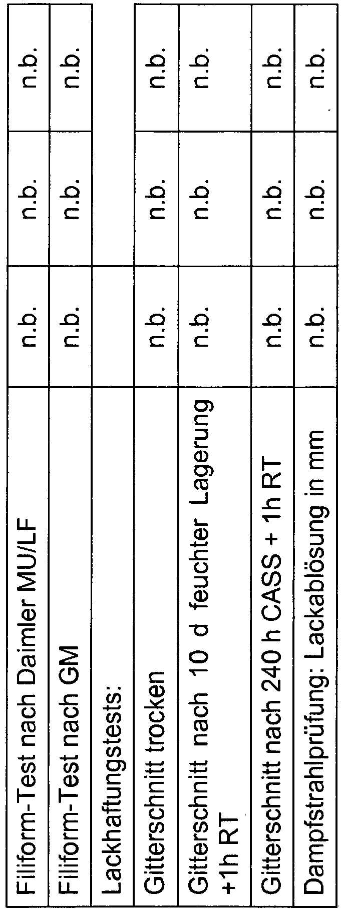

Das Schichtgewicht für den Metallgehalt an Titan bzw. Zirkon in der Beschichtung wurde mittels Röntgenfluoreszenzanalyse (Röntgenfluoreszenzspektrometer Philips PW 2400) bestimmt.

Das Aussehen der behandelten Speichen wurde sowohl nach dem Trocknen, als auch nach dem Lackieren mit dem klaren Pulverlack bewertet. Das Ergebnis ohne und mit Lack war fast immer das gleiche, da kleine Abläufer nach dem Lackieren oft nicht mehr zu erkennen sind. Eine Stelle eines kleinen Abläufers wird bei der visuellen Qualitätsbeurteilung nach dem Lackieren und Einbrennen des Pulverlacks als gut, aber nicht als sehr gut bewertet. Beim Aussehen der beschichteten Substrate sind kleine Abläufer, Flecken und wolkiges Aussehen als schlecht einzustufen, Abläufer eher als sehr schlecht. Auch bei der Transparenz dieser beschichteten Substrate ist ein mattes Aussehen als schlecht zu bewerten.

Die erfindungsgemäß behandelten und lackierten Speichen sollen farblos und hochtransparent sein. Sie glänzen bei gutem Aussehen fast wie vor der erfindungsgemäßen Behandlung oder bei sehr gutem Aussehen wie vor der erfindungsgemäßen Behandlung. Wenn das Aussehen der Beschichtung matt oder sogar sehr matt ist, dann ist sie als schlecht oder sogar als sehr schlecht einzustufen.

Bei vielen Aluminiumradherstellern wird heute als Testergebnis beim CASS-Test am Ritz ein Ergebnis meistens von < 2 mm, manchmal auch von < 1 mm erwartet.

**Tabelle D: Bezüglich Korrosionsbeständigkeit und Lackhaftung werden heute bei hochwertigen Aluminium-basierten Rädern gefordert:**

| Korrosionstests: | |
|---|---|
| CASS-Test: Ritz | ≤2 (≤1) mm |
| Filiform-Test nach Daimler MU/LF | ≤2 mm / ≤4 mm |
| Filiform-Test nach GM | ≤4 mm |

| Lackhaftungstests: | |
|---|---|
| Gitterschnitt trocken | Gt0-Gt1 |
| Gitterschnitt nach 10 d feuchter Lagerung +1h RT | Gt0-Gt1 |
| Gitterschnitt nach 240 h CASS +1hRT | Gt0-Gt1 |
| Dampfstrahlprüfung | keine Lackablösung * |

| | |
|---|---|
| * 0 mm Lackablösung notwendig | |

Proben, die diese Anforderungen nicht erfüllen, sind daher als weniger hochwertig, als schlecht oder sogar als sehr schlecht einzustufen. Wenn jedoch diese geforderten Werte deutlich unterschritten werden, so ist dies für den Kunden als Wettbewerbsvorteil zu sehen und als sehr positiv zu bewerten. Das gilt insbesondere für die Ergebnisse des Filiformtests nach Daimler. Für diesen Test gibt es derzeit weder einen endgültigen Namen, noch eine endgültige Richtlinie. Für diese Ergebnisse ist hervorzuheben, dass sie als in der Branche für die Fertigung von Aluminium-basierten Rädern als bisher offenbar einzigartig gut einzustufen sind.

Als Dampfstrahlprüfung wird eine Behandlung eines Ritzes auf der lackierten Fläche mit einem Dampfstrahlgerät, auch als Hochdruckreiniger bekannt, bezeichnet.

Beim Beispiel B 21 wurde in der ersten Beschichtungsstufe eine Silanhaltige Lösung aufgebracht, mit VE-Wasser gespült, anschließend eine Phosphonat-haltige Lösung aufgebracht und erneut mit VE-Wasser gespült, bevor die Teile getrocknet wurden (normaler Verfahrensablauf).

Beim Vergleichsbeispiel VB 28 ist die Chromatierung schon gelblich, was ein Anzeichen für zu hohe Chromauflagen ist. Trotz der zu hohen Chromauflage (=zu hohe Chromatgehalte) ist die Qualität des Filiform-Tests nach Daimler und nach der GM-Richtlinie deutlich schlechter als bei vielen erfindungsgemäßen Beispielen. Üblicherweise sind nur Chromauflagen bis zu 12 mg/m² Cr zulässig, hier sind es beim Vergleichsbeispiel VB 28 jedoch schon 16 mg/m². Trotz der überhöhten Chromatgehalte ist die Qualität der Chromatierungsschicht schlechter als der erfindungsgemäßen Konversionsbeschichtungen.

Beim Beispiel VB 29 wurde in der ersten Beschichtungsstufe eine Silan-freie Titan-/Zirkonfluorid-haltige Lösung aufgebracht.

Die Versuche ergaben, dass ein Schichtaufbau, der durch das Aufbringen einer Silan-haltigen Lösung in der ersten Beschichtungsstufe, gespült mit VE-Wasser, und anschließend einer Phosphonat-haltigen Lösung, mit VE-Wasser gespült und danach die beschichteten Teile getrocknet, erzeugt wurde, die besten Korrosions- und Lackhaftungseigenschaften ergab, wobei dann auch die optischen Eigenschaften sehr gut waren.

Das Beschichten der Silan-Beschichtung im feuchten Zustand und das anschließende Behandeln durch Spülen (rinse) mit Wasser (nass in nass-Verfahren, wet-wet-process) wie beim Beispiel B 23 ist weitaus vorteilhafter als das Auftrocknen der Silan-Beschichtung (no-rinse-Verfahren) wie beim Beispiel B 22.

## Patentansprüche

1. Verfahren zum Beschichten von metallischen Oberflächen, insbesondere von Oberflächen von Rädern aus einer Aluminiumlegierung, in einem mehrstufigen Verfahren, **dadurch gekennzeichnet, dass** die metallischen Oberflächen zuerst mit einer einen wesentlichen Gehalt an Silan/Silanol/Siloxan/Polysiloxan enthaltenden wässerigen Zusammensetzung und danach mit einer vorwiegend mindestens eine Phosphonverbindung enthaltenden wässerigen Zusammensetzung kontaktiert werden, wobei mindestens 80 % aller Phosphonverbindungen dieser Zusammensetzung ausgewählt sind aus Verbindungen des Typs XYZ,
wobei Y unabhängig voneinander eine unverzweigte Alkylgruppe mit 8 bis 16 C-Atomen ist oder eine Alkylgruppe mit 8 bis 16 C-Atomen ist, von denen bis zu 20 % der C-Atome der Alkylketten im statistischen Mittel eine funktionelle Gruppe aufweisen,
wobei X eine OH-, NH₂-, NHR'-, CH=CH₂-, CONHOH-, COOR'-, Acrylsäureamid-, Epoxy-, CH₂=CR"-COO-, COOH-, HSO₄-, (OH)₂PO-, (OH)₂PO₂-, (OH)(OR')PO-, (OH)(OR')PO₂- oder eine Si(OH)₃-Gruppe ist,
wobei Z eine (OH)₂PO-, (OH)₂PO₂-, (OH)(OR')PO- oder eine (OH)(OR')PO₂- Gruppe ist,
wobei R' eine Alkylgruppe mit 1 bis 4 C-Atomen ist,
wobei R" ein H-Atom oder eine Alkylgruppe mit 1 bis 4 C-Atomen ist,
wobei die Gruppen X und Z jeweils an die Gruppe Y in ihrer Endstellung gebunden sind,
und wobei nacheinander eine Silan-Beschichtung und danach eine Phosphonat-Beschichtung ausgebildet werden, bevor die metallischen Oberflächen mit mindestens einer Lackschicht oder/und mit mindestens einer Klebstoffschicht versehen werden.

2. Verfahren nach Anspruch 1, **dadurch gekennzeichnet, dass** die Silan/Silanol/Siloxan/Polysiloxan enthaltende wässerige Zusammensetzung einen Gesamtgehalt an Silan/Silanol/Siloxan/Polysiloxan im Bereich von 0,003 bis 10 g/L enthält.

3. Verfahren nach Anspruch 1 oder 2, **dadurch gekennzeichnet, dass** die die Silan/Silanol/Siloxan/Polysiloxan enthaltende wässerige Zusammensetzung mindestens ein Monosilan, mindestens ein Bis-silyl-Silan oder/und mindestens ein Tris-silyl-silan enthält.

4. Verfahren nach einem der vorstehenden Ansprüche, **dadurch gekennzeichnet, dass** die Silan/Silanol/Siloxan/Polysiloxan enthaltende wässerige Zusammensetzung mindestens ein Alkoxysilan, mindestens ein Aminosilan, mindestens ein Epoxysilan oder/und mindestens ein Vinylsilan oder eine Mischung von mindestens 2 verschiedenen Aminosilanen enthält.

5. Verfahren nach einem der vorstehenden Ansprüche, **dadurch gekennzeichnet, dass** die Silan/Silanol/Siloxan/Polysiloxan enthaltende wasserige Zusammensetzung mindestens ein Monoaminosilan, mindestens ein Diaminosilan, mindestens ein Di-Alkoxysilan oder/und mindestens ein TriAlkoxysilan enthält.

6. Verfahren nach einem der vorstehenden Ansprüche, **dadurch gekennzeichnet, dass** die Silan/Silanol/Siloxan/Polysiloxan enthaltende wässerige Zusammensetzung a) mindestens eine Verbindung ausgewählt aus Silanen, Silanolen, Siloxanen und Polysiloxanen und b) mindestens eine Titan-, Hafnium- oder/und Zirkonium-haltige Verbindung enthält.

7. Verfahren nach Anspruch 6, **dadurch gekennzeichnet, dass** die Silan/Silanol/Siloxan/Polysiloxan enthaltende wässerige Zusammensetzung zusätzlich c) mindestens eine Art Kationen ausgewählt aus Kationen von Metallen der 1. bis 3. und 5. bis 8. Nebengruppe einschließlich Lanthaniden und der 2. Hauptgruppe des Periodensystems der Elemente oder/und mindestens eine entsprechende Verbindung enthält.

8. Verfahren nach Anspruch 6 oder 7, **dadurch gekennzeichnet, dass** die Silan/Silanol/Siloxan/Polysiloxan enthaltende wässerige Zusammensetzung zusätzlich mindestens eine Substanz d) ausgewählt aus: d₁) Silicium-freien Verbindungen mit jeweils mindestens einer Amino-, Harnstoff-(=Ureido-), Imido- oder/und Imino-Gruppe, d₂) Anionen von Nitrit oder/und Verbindungen mit mindestens einer Nitro-Gruppe, d₃) Verbindungen auf Basis von Peroxid und d₄) Phosphor-haltigen Verbindungen, Anionen von mindestens einem Phosphat oder/und Anionen von mindestens einem Phosphonat sowie außerdem e) Wasser enthält.

9. Verfahren nach einem der Ansprüche 6 bis 8, **dadurch gekennzeichnet, dass** die Silan/Silanol/Siloxan/Polysiloxan enthaltende wässerige Zusammensetzung zusätzlich f) auch mindestens ein organisches Lösemittel enthält.

10. Verfahren nach einem der vorstehenden Ansprüche, **dadurch gekennzeichnet, dass** die Silan/Silanol/Siloxan/Polysiloxan enthaltende wässerige Zusammensetzung jeweils mindestens ein organisches Oligomer oder/und organisches Polymer, mindestens ein Amin, mindestens eine Base, mindestens einen Komplexbildner, mindestens ein Tensid, mindestens eine Art anorganischer Partikel oder/und jeweils mindestens eine anorganische oder/und organische Säure oder/und mindestens eines ihrer Derivate enthält.

11. Verfahren nach einem der vorstehenden Ansprüche, **dadurch gekennzeichnet, dass** die Silan/Silanol/Siloxan/Polysiloxan enthaltende wässerige Zusammensetzung einen pH-Wert im Bereich von 3 bis 11 aufweist.

12. Verfahren nach einem der vorstehenden Ansprüche, **dadurch gekennzeichnet, dass** die Silan/Silanol/Siloxan/Polysiloxan enthaltende wässerige Zusammensetzung beim Kontaktieren eine Temperatur im Bereich von 5 bis 80 °C aufweist.

13. Verfahren nach einem der vorstehenden Ansprüche, **dadurch gekennzeichnet, dass** die Silan/Silanol/Siloxan/Polysiloxan enthaltende wässerige Zusammensetzung durch Aufsprühen oder Eintauchen aufgebracht wird.

14. Verfahren nach einem der vorstehenden Ansprüche, **dadurch gekennzeichnet, dass** die mindestens eine Phosphonverbindung enthaltende wässerige Zusammensetzung einen Gesamtgehalt an Phosphonverbindung(en) im Bereich von 0,001 bis 10 g/L enthält.

15. Verfahren nach einem der vorstehenden Ansprüche, **dadurch gekennzeichnet, dass** die mindestens eine Phosphonverbindung enthaltende wässerige Zusammensetzung mindestens eine Phosphonverbindung auf Basis von Phosphonsäure, Diphosphonsäure, deren Ester oder/und deren Salz enthält.

16. Verfahren, nach einem der vorstehenden Ansprüche, **dadurch gekennzeichnet, dass** die mindestens eine Phosphonverbindung enthaltende wässerige Zusammensetzung neben Wasser oder einem Wasser-Lösemittelgemisch und neben mindestens einer Verbindung des Typs XYZ Biozid, Demulgator, Duftstoff, Emulgator, Entschäumer, Lösungsvermittler, Tensid, Mittel zur Anpassung des pH-Werts, Mittel zur Anpassung der elektrischen Leitfähigkeit, sonstige Hilfsstoffe, jeweils mindestens ein organisches Oligomer oder/und organisches Polymer, mindestens ein Amin oder/und mindestens einen Komplexbildner enthält.

17. Verfahren nach einem der vorstehenden Ansprüche, **dadurch gekennzeichnet, dass** die mindestens eine Phosphonverbindung enthaltende wässerige Zusammensetzung einen pH-Wert im Bereich von 1,5 bis 9,0 aufweist.

18. Verfahren nach einem der vorstehenden Ansprüche, **dadurch gekennzeichnet, dass** die mindestens eine Phosphonverbindung enthaltende wässerige Zusammensetzung beim Kontaktieren der metallischen Oberfläche eine Temperatur im Bereich von 5 bis 80 °C aufweist.

19. Verfahren nach einem der vorstehenden Ansprüche, **dadurch gekennzeichnet, dass** die mindestens eine Phosphonverbindung enthaltende wässerige Zusammensetzung durch Tauchen, Spritzen, Sprühen oder Vernebeln aufgebracht wird.

20. Verfahren nach einem der vorstehenden Ansprüche, **dadurch gekennzeichnet, dass** die metallischen Oberflächen vor dem Kontaktieren mit einer Silan/Silanol/Siloxan/Polysiloxan enthaltenden wässerigen Zusammensetzung gereinigt, entfettet oder/und gebeizt werden.

21. Verfahren nach einem der vorstehenden Ansprüche, **dadurch gekennzeichnet, dass** die metallischen Oberflächen vor oder/und nach dem Kontaktieren mit einer Silan/Silanol/Siloxan/Polysiloxan enthaltenden wässerigen Zusammensetzung oder/und vor oder/und nach dem Kontaktieren mit einer mindestens eine Phosphonverbindung enthaltenden wässerigen Zusammensetzung mit Wasser gespült werden.

22. Verfahren nach einem der vorstehenden Ansprüche, **dadurch gekennzeichnet, dass** die Silan-Beschichtung nicht durchgetrocknet wird, sondern im feuchten oder angetrockneten Zustand mit der Phosphonat-Beschichtung beschichtet wird.

23. Verfahren nach einem der Ansprüche 1 bis 21, **dadurch gekennzeichnet, dass** die Silan-Beschichtung gut getrocknet wird, bevor sie mit der Phosphonat-Beschichtung überzogen wird.

24. Verfahren nach einem der vorstehenden Ansprüche, **dadurch gekennzeichnet, dass** die Phosphonat-Beschichtung mit mindestens einer Schicht von einem Primer, einem Lack oder/und einem Klebstoff überzogen wird.

25. Verfahren nach einem der vorstehenden Ansprüche, **dadurch gekennzeichnet, dass** metallische Oberflächen auf Basis von Aluminium, Magnesium, Eisen, Stahl, Titan, Zink, Zinn oder/und deren Legierung(en) behandelt werden.

26. Verwendung der nach dem Verfahren gemäß den Ansprüchen 1 bis 25 beschichteten metallischen Produkte im Automobilbau, Fahrzeugbau, Flugzeugbau oder/und Fassadenbau.

## Claims

1. Process for coating metallic surfaces, in particular surfaces of wheels made from an aluminium alloy, in a multi-stage process, **characterised in that** the metallic surfaces are first brought into contact with an aqueous composition containing a substantial content of silane/silanol/siloxane/polysiloxane and then with an aqueous composition predominantly containing at least one phosphone compound, at least 80% of all phosphone compounds of this composition being selected from compounds of the type XYZ,
wherein Y is mutually independently an unbranched alkyl group having 8 to 16 C atoms or an alkyl group having 8 to 16 C atoms, of which as a statistical mean up to 20% of the C atoms of the alkyl chains exhibit a functional group,
wherein X is an OH, NH₂, NHR', CH=CH₂, CONHOH, COOR', acrylic acid amide, epoxy, CH₂=CR"-COO, COOH, HSO₄, (OH)₂PO, (OH)₂PO₂, (OH)(OR')PO, (OH)(OR')PO₂ or Si(OH)₃ group,
wherein Z is an (OH)₂PO, (OH)₂PO₂, (OH)(OR')PO or (OH)(OR')PO₂ group,
wherein R' is an alkyl group having 1 to 4 C atoms,
wherein R" is an H atom or an alkyl group having 1 to 4 C atoms,
wherein groups X and Z are each bound to group Y in its terminal position,
and wherein a silane coating and then a phosphonate coating are formed in succession before the metallic surfaces are coated with at least one coat of paint or/and with at least one coat of adhesive.

2. Process according to claim 1, **characterised in that** the aqueous composition containing silane/silanol/siloxane/polysiloxane contains a total content of silane/silanol/siloxane/polysiloxane in the range from 0.003 to 10 g/l.

3. Process according to claim 1 or 2, **characterised in that** the aqueous composition containing silane/silanol/siloxane/polysiloxane contains at least one monosilane, at least one bis-silyl silane or/and at least one tris-silyl silane.

4. Process according to one of the preceding claims, **characterised in that** the aqueous composition containing silane/silanol/siloxane/polysiloxane contains at least one alkoxysilane, at least one aminosilane, at least one epoxysilane or/and at least one vinylsilane or a mixture of at least 2 different aminosilanes.

5. Process according to one of the preceding claims, **characterised in that** the aqueous composition containing silane/silanol/siloxane/polysiloxane contains at least one monoaminosilane, at least one diaminosilane, at least one dialkoxysilane or/and at least one trialkoxysilane.

6. Process according to one of the preceding claims, **characterised in that** the aqueous composition containing silane/silanol/siloxane/polysiloxane contains a) at least one compound selected from silanes, silanols, siloxanes and polysiloxanes and b) at least one compound containing titanium, hafnium or/and zirconium.

7. Process according to claim 6, **characterised in that** the aqueous composition containing silane/silanol/siloxane/polysiloxane additionally contains c) at least one type of cation selected from cations of metals of the 1^{st} to 3^{rd} and 5^{th} to 8^{th} subgroup including lanthanides and the 2^{nd} main group of the periodic table or/and at least one corresponding compound.

8. Process according to claim 6 or 7, **characterised in that** the aqueous composition containing silane/silanol/siloxane/polysiloxane additionally contains at least one substance d) selected from: d₁) silicon-free compounds each having at least one amino, urea (=ureido), imido or/and imino group, d₂) anions of nitrite or/and compounds having at least one nitro group, d₃) compounds based on peroxide and d₄) phosphorus-containing compounds, anions of at least one phosphate or/and anions of at least one phosphonate and moreover e) water.

9. Process according to one of claims 6 to 8, **characterised in that** the aqueous composition containing silane/silanol/siloxane/polysiloxane also additionally contains f) at least one organic solvent.

10. Process according to one of the preceding claims, **characterised in that** the aqueous composition containing silane/silanol/siloxane/polysiloxane contains in each case at least one organic oligomer or/and organic polymer, at least one amine, at least one base, at least one complexing agent, at least one surfactant, at least one type of inorganic particle or/and in each case at least one inorganic or/and organic acid or/and at least one derivative thereof.

11. Process according to one of the preceding claims, **characterised in that** the aqueous composition containing silane/silanol/siloxane/polysiloxane has a pH in the range from 3 to 11.

12. Process according to one of the preceding claims, **characterised in that** the aqueous composition containing silane/silanol/siloxane/polysiloxane has a temperature in the range from 5 to 80°C when contact is made.

13. Process according to one of the preceding claims, **characterised in that** the aqueous composition containing silane/silanol/siloxane/polysiloxane is applied by spraying or dipping.

14. Process according to one of the preceding claims, **characterised in that** the aqueous composition containing at least one phosphone compound contains a total content of phosphone compound(s) in the range from 0.001 to 10 g/l.

15. Process according to one of the preceding claims, **characterised in that** the aqueous composition containing at least one phosphone compound contains at least one phosphone compound based on phosphonic acid, diphosphonic acid, esters thereof or/and salts thereof.

16. Process according to one of the preceding claims, **characterised in that** the aqueous composition containing at least one phosphone compound contains in addition to water or a water/solvent blend and in addition to at least one compound of the type XYZ biocide, demulsifier, fragrance, emulsifier, defoamer, solubiliser, surfactant, agent for adjusting the pH, agent for adjusting the electrical conductivity, other auxiliary substances, in each case at least one organic oligomer or/and organic polymer, at least one amine or/and at least one complexing agent.

17. Process according to one of the preceding claims, **characterised in that** the aqueous composition containing at least one phosphone compound has a pH in the range from 1.5 to 9.0.

18. Process according to one of the preceding claims, **characterised in that** the aqueous composition containing at least one phosphone compound has a temperature in the range from 5 to 80°C when contact is made with the metallic surface.

19. Process according to one of the preceding claims, **characterised in that** the aqueous composition containing at least one phosphone compound is applied by dipping, spattering, spraying or misting.

20. Process according to one of the preceding claims, **characterised in that** the metallic surfaces are cleaned, degreased or/and pickled before being brought into contact with an aqueous composition containing silane/silanol/ siloxane/polysiloxane.

21. Process according to one of the preceding claims, **characterised in that** the metallic surfaces are rinsed with water before or/and after being brought into contact with an aqueous composition containing silane/silanol/siloxane/ polysiloxane or/and before or/and after being brought into contact with an aqueous composition containing at least one phosphone compound.

22. Process according to one of the preceding claims, **characterised in that** the silane coating is not completely dried but is coated with the phosphonate coating in a wet or partially dried state.

23. Process according to one of claims 1 to 21, **characterised in that** the silane coating is well dried before being coated with the phosphonate coating.

24. Process according to one of the preceding claims, **characterised in that** the phosphonate coating is covered with at least one coat of a primer, a paint or/and an adhesive.

25. Process according to one of the preceding claims, **characterised in that** metallic surfaces based on aluminium, magnesium, iron, steel, titanium, zinc, tin or/and alloy(s) thereof are treated.

26. Use of the metallic products coated by the process according to claims 1 to 25 in automotive construction, vehicle construction, aircraft construction or/and façade construction.

## Revendications

1. Procédé d'enduction de surfaces métalliques, en particulier de surfaces de roues en alliage d'aluminium, selon un procédé à plusieurs étapes, **caractérisé en ce que** les surfaces métalliques sont d'abord mises en contact avec une composition aqueuse ayant une teneur significative en silane/silanol/siloxane/polysiloxane, et ensuite avec une composition aqueuse contenant principalement au moins un composé de phosphonium, au moins 80 % de tous les composés de phosphonium de cette composition étant choisis à partir de composés du type XYZ,
où Y est indépendamment l'un de l'autre un groupe alkyle non ramifié avec 8 à 16 atomes C ou un groupe alkyle avec 8 à 16 atomes C, parmi lesquels jusqu'à 20 % des atomes C des chaînes d'alkyle présentent en moyenne statistique un groupe fonctionnel,
où X est un groupe OH, NH₂, NHR', CH=CH₂, CONHOH, COOR', amide d'acide acrylique, époxy, CH₂=CR"-COO, COOH, HSO₄, (OH)₂PO, (OH)₂PO₂, (OH)(OR')PO, (OH)(OR')PO₂ ou un groupe Si(OH)₃,
où Z est un groupe (OH)₂PO, (OH)₂PO₂, (OH)(OR')PO ou un groupe (OH)(OR')PO₂,
où R' est un groupe alkyle avec 1 à 4 atomes C,
où R" est un atome H ou un groupe alkyle avec 1 à 4 atomes C,
où les groupes X et Z sont fixés respectivement au groupe Y dans leur position finale,
et où on réalise successivement un revêtement au silane et ensuite un revêtement au phosphonate, avant que les surfaces métalliques ne soient pourvues d'au moins une couche de vernis ou/et d'au moins une couche d'adhésif.

2. Procédé selon la revendication 1, **caractérisé en ce que** la composition aqueuse contenant du silane/silanol/siloxane/polysiloxane présente une teneur totale en silane/silanol/siloxane/polysiloxane comprise dans la plage allant de 0,003 à 10 g/L.

3. Procédé selon la revendication 1 ou 2, **caractérisé en ce que** la composition aqueuse contenant du silane/silanol/siloxane/polysiloxane contient au moins un monosilane, au moins un bis-silyl-silane ou/et au moins un tris-silyl-silane.

4. Procédé selon l'une des revendications précédentes, **caractérisé en ce que** la composition aqueuse contenant du silane/silanol/siloxane/polysiloxane contient au moins un alkoxysilane, au moins un aminosilane, au moins un époxysilane ou/et au moins un vinylsilane ou un mélange d'au moins 2 aminosilanes différents.

5. Procédé selon l'une des revendications précédentes, **caractérisé en ce que** la composition aqueuse contenant du silane/silanol/siloxane/polysiloxane contient au moins un monoaminosilane, au moins un diaminosilane, au moins un dialkoxysilane ou/et au moins un trialkoxysilane.

6. Procédé selon l'une des revendications précédentes, **caractérisé en ce que** la composition aqueuse contenant du silane/silanol/siloxane/polysiloxane contient a) au moins un composé choisi parmi des silanes, des silanols, des siloxanes et des polysiloxanes, et b) au moins un composé contenant du titane, du hafnium ou/et du zirconium.

7. Procédé selon la revendication 6, **caractérisé en ce que** la composition aqueuse contenant du silane/silanol/siloxane/polysiloxane contient en plus c) au moins un type de cations choisis parmi des cations de métaux du sous-groupe 1 à 3 et 5 à 8, y compris les lanthanides et le groupe principal 2 de la classification périodique des éléments ou/et au moins un composé correspondant.

8. Procédé selon la revendication 6 ou 7, **caractérisé en ce que** la composition aqueuse contenant du silane/silanol/siloxane/polysiloxane contient en plus au moins une substance d) choisie parmi : d₁) des composés exempts de silicium avec respectivement au moins un groupe amino, urée (=uréido), imido ou/et imino, d₂) des anions de nitrite ou/et de composés avec au moins un groupe nitro, d₃) des composés à base de peroxyde et d₄) des composés contenant du phosphore, des anions d'au moins un phosphonate ou/et des anions d'au moins un phosphonate, ainsi que, en outre, e) de l'eau.

9. Procédé selon l'une des revendications 6 à 8, **caractérisé en ce que** la composition aqueuse contenant du silane/silanol/siloxane/polysiloxane contient en plus f) également au moins un solvant organique.

10. Procédé selon l'une des revendications précédentes, **caractérisé en ce que** la composition aqueuse contenant du silane/silanol/siloxane/polysiloxane contient respectivement au moins un oligomère organique ou/et un polymère organique, au moins une amine, au moins une base, au moins un agent complexant, au moins un agent tensioactif, au moins un type de particules inorganiques ou/et respectivement au moins un acide inorganique ou/et organique ou/et au moins l'un de leurs dérivés.

11. Procédé selon l'une des revendications précédentes, **caractérisé en ce que** la composition aqueuse contenant du silane/silanol/siloxane/polysiloxane présente une valeur pH comprise dans la plage allant de 3 à 11.

12. Procédé selon l'une des revendications précédentes, **caractérisé en ce que** la composition aqueuse contenant du silane/silanol/siloxane/polysiloxane présente, lors de la mise en contact, une température comprise dans la plage allant de 5 à 80 °C.

13. Procédé selon l'une des revendications précédentes, **caractérisé en ce que** la composition aqueuse contenant du silane/silanol/siloxane/polysiloxane est appliquée par pulvérisation ou immersion.

14. Procédé selon l'une des revendications précédentes, **caractérisé en ce que** la composition aqueuse contenant au moins un composé de phosphonium présente une teneur totale en composé(s) de phosphonium comprise dans la plage allant de 0,001 à 10 g/L.

15. Procédé selon l'une des revendications précédentes, **caractérisé en ce que** la composition aqueuse contenant au moins un composé de phosphonium contient au moins un composé de phosphonium à base d'acide phosphonique, d'acide diphosphonique, de leur ester ou/et de leur sel.

16. Procédé selon l'une des revendications précédentes, **caractérisé en ce que** la composition aqueuse contenant au moins un composé de phosphonium contient, outre de l'eau ou un mélange eau-solvant, et outre au moins un composé de type biocide XYZ, désémulsifiant, parfum, émulsifiant, agent antimoussant, agent de solubilisation, agent tensioactif, des agents pour adapter la valeur pH, des agents pour adapter la conductibilité électrique, d'autres agents accessoires, respectivement au moins un oligomère organique ou/et un polymère organique, au moins une amine ou/et au moins un agent complexant.

17. Procédé selon l'une des revendications précédentes, **caractérisé en ce que** la composition aqueuse contenant au moins un composé de phosphonium présente une valeur pH comprise dans la plage allant de 1,5 à 9,0.

18. Procédé selon l'une des revendications précédentes, **caractérisé en ce que** la composition aqueuse contenant au moins un composé de phosphonium présente, lors de la mise en contact avec la surface métallique, une température comprise dans la plage allant de 5 à 80 °C.

19. Procédé selon l'une des revendications précédentes, **caractérisé en ce que** la composition aqueuse contenant au moins un composé de phosphonium est appliquée par immersion, projection, pulvérisation ou vaporisation.

20. Procédé selon l'une des revendications précédentes, **caractérisé en ce qu'**avant la mise en contact avec une composition aqueuse contenant du silane/silanol/siloxane/polysiloxane, les surfaces métalliques sont nettoyées, dégraissées ou/et décapées.

21. Procédé selon l'une des revendications précédentes, **caractérisé en ce qu'**avant ou/et après la mise en contact avec une composition aqueuse contenant du silane/silanol/siloxane/polysiloxane, ou/et avant ou/et après la mise en contact avec une composition aqueuse contenant au moins un composé de phosphonium, les surfaces métalliques sont rincées avec de l'eau.

22. Procédé selon l'une des revendications précédentes, **caractérisé en ce que** le revêtement au silane n'est pas séché à coeur mais est recouvert avec le revêtement au phosphonate à l'état humide ou légèrement sec.

23. Procédé selon l'une des revendications 1 à 21, **caractérisé en ce que** le revêtement au silane est bien séché avant d'être recouvert avec le revêtement au phosphonate.

24. Procédé selon l'une des revendications précédentes, **caractérisé en ce que** le revêtement au phosphonate est recouvert d'au moins une couche de fond, de vernis ou/et d'adhésif.

25. Procédé selon l'une des revendications précédentes, **caractérisé en ce que** l'on traite des surfaces métalliques à base d'aluminium, de magnésium, de fer, d'acier, de titane, de zinc, d'étain ou/et de leur(s) alliage(s).

26. Utilisation des produits métalliques enduits avec le procédé selon les revendications 1 à 25, dans la construction automobile, la construction de véhicules, la construction d'avions ou/et la construction de façades.
